(19) Europäisches Patentamt
European Patent Office
Office européen des brevets

(11) EP 4 403 591 A1

(12) EUROPEAN PATENT APPLICATION
published in accordance with Art. 153(4) EPC

(43) Date of publication:
24.07.2024 Bulletin 2024/30

(21) Application number: 23835766.9

(22) Date of filing: 03.07.2023

(51) International Patent Classification (IPC):
*C08G 64/16* (2006.01) *C08G 64/30* (2006.01)
*C08L 69/00* (2006.01) *G02B 1/04* (2006.01)

(52) Cooperative Patent Classification (CPC):
C08G 64/16; C08G 64/30; C08L 69/00; G02B 1/04

(86) International application number:
PCT/KR2023/009292

(87) International publication number:
WO 2024/010300 (11.01.2024 Gazette 2024/02)

(84) Designated Contracting States:
AL AT BE BG CH CY CZ DE DK EE ES FI FR GB GR HR HU IE IS IT LI LT LU LV MC ME MK MT NL NO PL PT RO RS SE SI SK SM TR
Designated Extension States:
BA
Designated Validation States:
KH MA MD TN

(30) Priority: 05.07.2022 KR 20220082384

(71) Applicant: LG Chem, Ltd.
Yeongdeungpo-gu
Seoul 07336 (KR)

(72) Inventors:
- CHOI, Il Hwan
  Daejeon 34122 (KR)
- BAEK, Jonghwa
  Daejeon 34122 (KR)
- KIM, Kyeongmun
  Daejeon 34122 (KR)
- BAE, Jaesoon
  Daejeon 34122 (KR)
- YIM, Hye Jin
  Daejeon 34122 (KR)
- BAEK, Hyeonwoo
  Daejeon 34122 (KR)
- YOO, Seungmin
  Daejeon 34122 (KR)
- LEE, Seungmook
  Daejeon 34122 (KR)

(74) Representative: Hoffmann Eitle
Patent- und Rechtsanwälte PartmbB
Arabellastraße 30
81925 München (DE)

# (54) POLYCARBONATE RESIN AND METHOD FOR PREPARING SAME

(57) The present application relates to a polycarbonate resin including a unit of Chemical Formula 1, a method for preparing the same, a polycarbonate resin composition including the same, and a molded article including the polycarbonate resin composition.

EP 4 403 591 A1

## Description

[Technical Field]

This application claims priority to and the benefit of Korean Patent Application No. 10-2022-0082384 filed in the Korean Intellectual Property Office on July 5, 2022, the entire contents of which are incorporated herein by reference.
The present specification relates to a polycarbonate resin and a preparation method thereof.

[Background Art]

The higher the refractive index of an optical material, the thinner the optical lens required to achieve the same level of correction. Accordingly, as the refractive index of the optical material is increased, a thinner and lighter lens can be manufactured, so that it is possible to make various devices, where lenses are used, smaller.
Generally, when the refractive index of an optical material is increased, there is a problem in that the Abbe's Number becomes low, and for use as an optical material, a certain level or higher of transparency is required.

[Detailed Description of the Invention]

[Technical Problem]

An exemplary embodiment of the present specification has been made in an effort to provide a polycarbonate resin having a novel structure and a preparation method thereof.
Another exemplary embodiment of the present specification has been made in an effort to provide a polycarbonate resin composition including a polycarbonate resin having a novel structure and a molded article prepared from the polycarbonate resin composition.

[Technical Solution]

An exemplary embodiment of the present specification provides a polycarbonate resin including a unit of the following Chemical Formula 1.

[Chemical Formula 1]

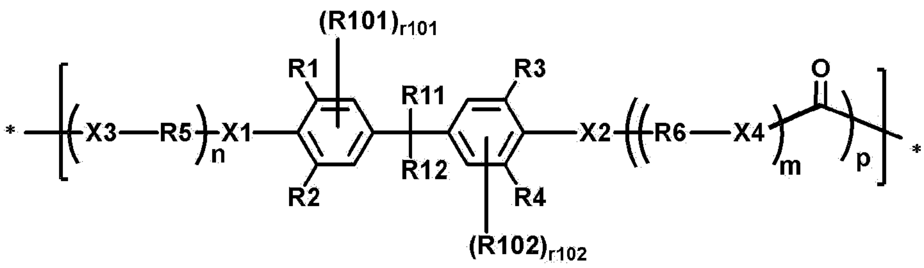

In Chemical Formula 1,

X1 to X4 are the same as or different from each other, and are each independently O or S,
R1 and R3 are the same as or different from each other, and are each independently a phenyl group which is substituted with a cyano group, or a substituted or unsubstituted alkyl group; a substituted or unsubstituted aryl group having 10 or more carbon atoms; a substituted or unsubstituted condensed ring group of an aromatic hydrocarbon ring and an aliphatic hydrocarbon ring; or a substituted or unsubstituted heteroaryl group,
R2 and R4 are the same as or different from each other, and are each independently hydrogen; a substituted or unsubstituted alkyl group; a substituted or unsubstituted cycloalkyl group; a substituted or unsubstituted aryl group; a substituted or unsubstituted condensed ring group of an aromatic hydrocarbon ring and an aliphatic hydrocarbon ring; or a substituted or unsubstituted heteroaryl group,
R5 and R6 are the same as or different from each other, and are each independently a substituted or unsubstituted alkylene group; or a substituted or unsubstituted cycloalkylene group,
R11 and R12 are the same as or different from each other, and are each independently a substituted or unsubstituted

alkyl group; a substituted or unsubstituted cycloalkyl group; a substituted or unsubstituted aryl group; or a substituted or unsubstituted heteroaryl group, or are bonded to each other to form a substituted or unsubstituted aromatic hydrocarbon ring,

R101 and R102 are the same as or different from each other, and are each independently hydrogen; a substituted or unsubstituted alkyl group; a substituted or unsubstituted cycloalkyl group; a substituted or unsubstituted aryl group; or a substituted or unsubstituted heteroaryl group,

r101 is 1 or 2, and when r101 is 2, two R101's are the same as or different from each other,

r102 is 1 or 2, and when r102 is 2, two R102's are the same as or different from each other,

m and n are each independently an integer from 0 to 6,

p is an integer from 1 to 6,

when m, n and p are each independently 2 or higher, structures in each parenthesis are the same as or different from each other, and

* means a moiety linked to the main chain of the resin.

Another exemplary embodiment of the present invention provides a method for preparing a polycarbonate resin, the method including: polymerizing a composition for preparing the polycarbonate resin, which includes a compound of the following Chemical Formula 1a; and a polycarbonate precursor.

[Chemical Formula 1a]

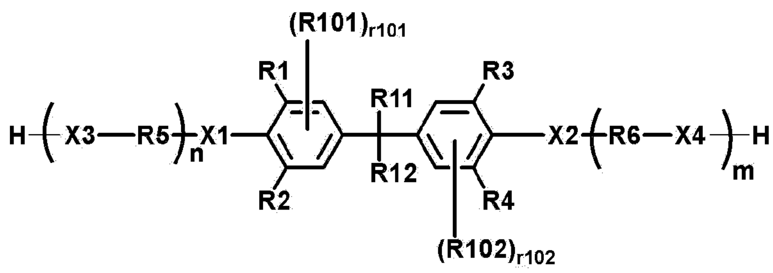

In Chemical Formula 1a,

the definitions of m, n, R1 to R6, R11, R12, R101, R102, r101, r102 and X1 to X4 are the same as those defined in Chemical Formula 1.

Still another exemplary embodiment of the present specification provides a polycarbonate resin composition including the polycarbonate resin according to the above-described exemplary embodiment.

Yet another exemplary embodiment of the present specification provides a molded article including the polycarbonate resin composition according to the above-described exemplary embodiment.

[Advantageous Effects]

The polycarbonate resin according to the exemplary embodiments of the present specification has a high refractive index and high transparency.

By using the polycarbonate resin according to the exemplary embodiments of the present specification, an excellent optical lens, optical film, optical thin film, optical resin, optical fiber, or LED encap having a small thickness can be obtained.

[Best Mode]

Hereinafter, the present specification will be described in more detail.

For a polycarbonate resin including the unit of Chemical Formula 1 according to an exemplary embodiment of the present specification, from the relationship formula between the molecular structure and the refractive index, which is known by the Lorentz-Lorenz's formula, it can be seen that the refractive index of a material composed of molecules is increased by increasing the electron density of the molecule and reducing the molecular volume. Further, since the core structure of Chemical Formula 1 is a derivative of bisphenol A (BPA), the molecular volume is small and the ability to pack is excellent, and thus, the refractive index of the resin may be improved.

In addition, since R1 to R4 are a substituent rich in electrons, the refractive index of the resin may be further improved by increasing the electron density of the structure of Chemical Formula 1. Therefore, the polycarbonate resin

according to an exemplary embodiment of the present specification has a high refractive index and high transparency, and an optical lens, an optical film, or an optical resin using the polycarbonate resin has a small thickness and may exhibit excellent optical characteristics.

Further, the resin may further include any one or more units of Chemical Formulae 2-1 to 2-3, and thus may supplement the glass transition temperature (Tg) of the unit of Chemical Formula 1 or make the chain behavior of the unit of Chemical Formula 1 flexible, and has a technical effect advantageous for the injection processing of a molded article.

Throughout the specification of the present application, the term "combination thereof" included in the Markush type expression means a mixture or combination of one or more selected from the group consisting of constituent elements described in the Markush type expression, and means including one or more selected from the group consisting of the above-described constituent elements.

Examples of the substituents in the present specification will be described below, but are not limited thereto.

In the present specification,

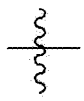

means a moiety to be linked.

In the present specification, the term "substitution" means that a hydrogen atom bonded to a carbon atom of a compound is changed into another substituent, and a position to be substituted is not limited as long as the position is a position at which the hydrogen atom is substituted, that is, a position at which the substituent may be substituted, and when two or more are substituted, the two or more substituents may be the same as or different from each other.

In the present specification, the term "substituted or unsubstituted" means being substituted with one or more substituents selected from the group consisting of deuterium; a halogen group; a hydroxyl group; a cyano group; an alkyl group; a cycloalkyl group; an alkoxy group; an alkenyl group; an aryloxy group; an arylthio group; alkylthio group; a silyl group; an aryl group; a condensed ring group of an aromatic hydrocarbon ring and an aliphatic hydrocarbon ring; and a heterocyclic group, being substituted with a substituent to which two or more substituents among the exemplified substituents are linked, or having no substituent.

In the present specification, the fact that two or more substituents are linked indicates that hydrogen of any one substituent is linked to another substituent. For example, when two substituents are linked to each other, a phenyl group and a naphthyl group may be linked to each other to become a substituent of

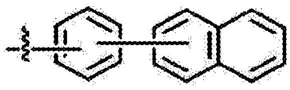

or

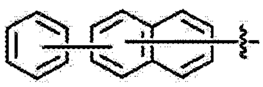

.

Further, the case where three substituents are linked to one another includes not only a case where (Substituent 1)-(Substituent 2)-(Substituent 3) are consecutively linked to one another, but also a case where (Substituent 2) and (Substituent 3) are linked to (Substituent 1). For example, a phenyl group, a naphthyl group , and an isopropyl group may be linked to one another to form a substituent of

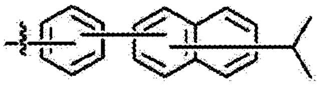

,

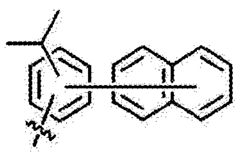

,

or

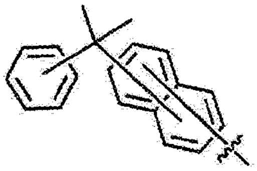

.

The above-described definition also applies equally to the case where four or more substituents are linked to one another.

In the present specification, examples of a halogen group include fluorine, chlorine, bromine or iodine.

In the present specification, the alkyl group may be straight-chained or branched, and the number of carbon atoms thereof is not particularly limited, but is preferably 1 to 30. Specific examples thereof include a methyl group, an ethyl group, a propyl group, an n-propyl group, an isopropyl group, a butyl group, an n-butyl group, an isobutyl group, a tert-butyl group, a sec-butyl group, a 1-methyl-butyl group, a 1-ethyl-butyl group, a pentyl group, an n-pentyl group, an isopentyl group, a neopentyl group, a tert-pentyl group, a hexyl group, an n-hexyl group, a 1-methylpentyl group, a 2-methylpentyl group, a 4-methyl-2-pentyl group, a 3,3-dimethylbutyl group, a 2-ethylbutyl group, a heptyl group, an n-heptyl group, a 1-methylhexyl group, a cyclopentylmethyl group, a cyclohexylmethyl group, an octyl group, an n-octyl group, a tert-octyl group, a 1-methylheptyl group, a 2-ethylhexyl group, a 2-propylpentyl group, an n-nonyl group, a 2,2-dimethylheptyl group, a 1-ethyl-propyl group, a 1,1-dimethyl-propyl group, an isohexyl group, a 2-methylpentyl group, a 4-methylhexyl group, a 5-methylhexyl group, and the like, but are not limited thereto.

In the present specification, a cycloalkyl group is not particularly limited, but has preferably 3 to 30 carbon atoms, and specific examples thereof include a cyclopropyl group, a cyclobutyl group, a cyclopentyl group, a 3-methylcyclopentyl group, a 2,3-dimethylcyclopentyl group, a cyclohexyl group, a 3-methylcyclohexyl group, a 4-methylcyclohexyl group, a 2,3-dimethylcyclohexyl group, a 3,4,5-trimethylcyclohexyl group, a 4-tert-butylcyclohexyl group, a cycloheptyl group, a cyclooctyl group, an adamantyl group, and the like, but are not limited thereto.

In the present specification, an alkoxy group may be straight-chained, branched, or cyclic. The number of carbon atoms of the alkoxy group is not particularly limited, but is preferably 1 to 30. Specific examples thereof include a methoxy group, an ethoxy group, an n-propoxy group, an isopropoxy group, an n-butoxy group, an isobutoxy group, a tert-butoxy group, a sec-butoxy group, an n-pentyloxy group, an neopentyloxy group, an isopentyloxy group, an n-hexyloxy group, a 3,3-dimethylbutyloxy group, a 2-ethylbutyloxy group, an n-octyloxy group, an n-nonyloxy group, an n-decyloxy group, a benzyloxy group, a p-methylbenzyloxy group, and the like, but are not limited thereto.

In the present specification, an alkenyl group may be straight-chained or branched, and the number of carbon atoms thereof is not particularly limited, but is preferably 2 to 30. Specific examples thereof include a vinyl group, a 1-propenyl group, an isopropenyl group, a 1-butenyl group, a 2-butenyl group, a 3-butenyl group, a 1-pentenyl group, a 2-pentenyl group, a 3-pentenyl group, a 3-methyl-1-butenyl group, a 1,3-butadienyl group, an allyl group, a 1-phenylvinyl-1-yl group, a 2-phenylvinyl-1-yl group, a 2,2-diphenylvinyl-1-yl group, a 2-phenyl-2-(naphthyl-1-yl)vinyl-1-yl group, a stilbenyl group, a styrenyl group, and the like, but are not limited thereto. In the present specification, an aryl group is not particularly limited, but has preferably 6 to 30 carbon atoms, and the aryl group may be monocyclic or polycyclic.

When the aryl group is a monocyclic aryl group, the number of carbon atoms thereof is not particularly limited, but is preferably 6 to 50. Specific examples of the monocyclic aryl group include a phenyl group, a biphenyl group, a terphenyl group, and the like, but are not limited thereto.

When the aryl group is a polycyclic aryl group, the number of carbon atoms thereof is not particularly limited, but is preferably 10 to 50. Specific examples of the polycyclic aryl group include a naphthyl group, an anthracene group, a phenanthrene group, a triphenylene group, a pyrene group, a phenalene group, a perylene group, a chrysene group, a fluorene group, and the like, but are not limited thereto.

In the present specification, the fluorene group may be substituted, and adjacent groups may be bonded to each other to form a ring.

Examples of the fluorene group include

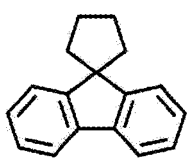

,

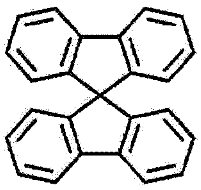, 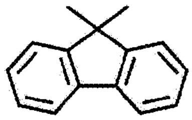, 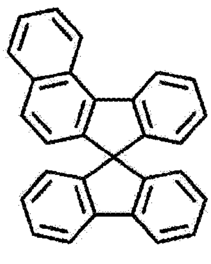, 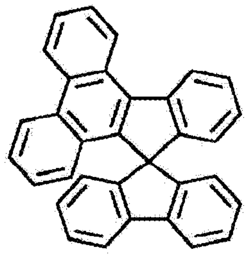,

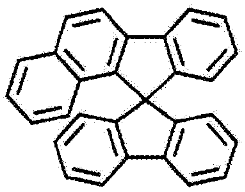, 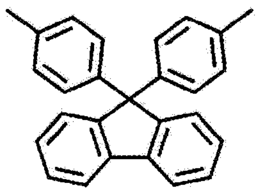, 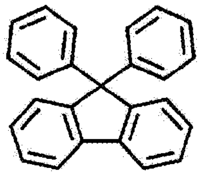,

and the like, but are not limited thereto.

In the present specification, an "adjacent" group may mean a substituent substituting an atom directly linked to an atom substituted by the corresponding substituent, a substituent sterically most closely positioned to the corresponding substituent, or another substituent substituting an atom substituted by the corresponding substituent. For example, two substituents substituting ortho positions in a benzene ring, and two substituents substituting the same carbon in an aliphatic ring may be interpreted as groups "adjacent" to each other.

In the present specification, a heteroaryl group includes one or more atoms other than carbon, that is, one or more heteroatoms, and specifically, the heteroatom may include one or more of O, N, Se, S, or the like. The number of carbon atoms thereof is not particularly limited, but is preferably 2 to 30, and the heteroaryl group may be monocyclic or polycyclic. Examples of the heteroaryl group include a thiophene group, a furan group, a pyrrole group, an imidazole group, a thiazole group, an oxazole group, an oxadiazole group, a pyridine group, a bipyridine group, a pyrimidine group, a triazine group, a triazole group, an acridine group, a pyridazine group, a pyrazine group, a quinoline group, a quinazoline group, a quinoxaline group, a phthalazine group, a pyridopyrimidine group, a pyridopyrazine group, a pyrazinopyrazine group, an isoquinoline group, an indole group, a carbazole group, a benzoxazole group, a benzimidazole group, a benzothiazole group, a benzocarbazole group, a benzothiophene group, a dibenzothiophene group, a benzofuran group, a phenanthridine group, a phenanthroline group, an isoxazole group, a thiadiazole group, a dibenzofuran group, a dibenzosilole group, a phenoxathiin group, a phenoxazine group, a phenothiazine group, a dihydroindenocarbazole group, a spirofluorenexanthene group, a spirofluorenethioxanthene group, a tetrahydronaphthothiophene group, a tetrahydronaphthofuran group, a tetrahydrobenzothiophene group, a tetrahydrobenzofuran group, and the like, but are not limited thereto.

In the present specification, the silyl group may be an alkylsilyl group, an arylsilyl group, an alkylarylsilyl group, a heteroarylsilyl group, and the like. The above-described examples of the alkyl group may be applied to the alkyl group in the alkylsilyl group, the above-described examples of the aryl group may be applied to the aryl group in the arylsilyl group, the examples of the alkyl group and the aryl group may be applied to the alkyl group and the aryl group in the alkylarylsilyl group, and the examples of the heterocyclic group may be applied to the heteroaryl group in the heteroarylsilyl group.

In the present specification, a hydrocarbon ring group may be an aromatic hydrocarbon ring group, an aliphatic hydrocarbon ring group, or a condensed ring group of an aromatic hydrocarbon ring and an aliphatic hydrocarbon ring and may be selected among examples of the cycloalkyl group, the aryl group, and a combination thereof, and examples of the hydrocarbon ring group include a phenyl group, a cyclohexyl group, an adamantyl group, a bicyclo[2.2.1]heptyl group, a bicyclo[2.2.1]octyl group, a tetrahydronaphthalene group, a tetrahydroanthracene group, a 1,2,3,4-tetrahydro-1,4-methanonaphthalene group, a 1,2,3,4-tetrahydro-1,4-ethanonaphthalene group, a spirocyclopentanefluorene group, a spiroadamantanefluorene group, a spirocyclohexanefluorene group, and the like, but are not limited thereto.

In the present specification, a heterocyclic group includes one or more atoms other than carbon, that is, one or more heteroatoms, and specifically, the heteroatom may include one or more of O, N, Se, S, or the like. The heterocyclic group may be monocyclic or polycyclic, and may be an aromatic heterocyclic group; an aliphatic heterocyclic group; a condensed ring group of an aromatic hetero ring and an aliphatic hetero ring; a condensed ring group of an aliphatic hydrocarbon ring, an aromatic hydrocarbon ring and an aromatic hetero ring, or a condensed ring group of an aliphatic

hydrocarbon ring, an aromatic hydrocarbon ring and an aliphatic hetero ring, and the aromatic heterocyclic group may be selected among the examples of the heteroaryl group.

In the present specification, an aliphatic heterocyclic group means an aliphatic ring group including one or more of hetero atoms. An aliphatic heterocyclic group includes all of a single-bonded aliphatic ring group, an aliphatic ring group including a multiple bond, or an aliphatic ring group in a form in which a ring including a single bond and a multiple bond is condensed. Examples of the aliphatic hetero ring group include an epoxy group, an oxirane group, a tetrahydrofuran group, a 1,4-dioxane group, a pyrrolidine group, a piperidine group, a morpholine group, an oxepane group, an azocane group, a thiocane group, a tetrahydronaphthothiophene group, a tetrahydronaphthofuran group, a tetrahydrobenzothiophene group, a tetrahydrobenzofuran group, and the like, but are not limited thereto.

In the present specification, the aryloxy group may be represented by -ORo, and the description on the above-described aryl group is applied to Ro.

In the present specification, the arylthio group may be represented by -SRs1, and the description on the above-described aryl group is applied to Rs1.

In the present specification, the alkylthio group may be represented by -SRs2, and the description on the above-described alkyl group is applied to Rs2.

In the present specification, an alkylene group means a group having two bonding positions in an alkyl group, that is, a divalent group. The above-described description on the alkyl group may be applied to the alkylene group, except for a divalent alkylene group.

In the present specification, the cycloalkylene group means a group having two bonding positions in a cycloalkyl group, that is, a divalent group. The above-described description on the cycloalkyl group may be applied to the cycloalkylene groups, except for a divalent cycloalkylene group.

In the present specification, a condensed ring group of a divalent aromatic hydrocarbon ring and an aliphatic hydrocarbon ring means a group having two bonding positions in the condensed ring group of the aromatic hydrocarbon ring and the aliphatic hydrocarbon ring, that is, a divalent group. The above-described description on the condensed ring group of the aromatic hydrocarbon ring and the aliphatic hydrocarbon ring may be applied, except that the groups are each a divalent group.

In the present specification, an arylene group means a group having two bonding positions in an aryl group, that is, a divalent group. The above-described description on the aryl group may be applied to the arylene group, except for a divalent arylene group.

In the present specification, hydrogen is hydrogen, deuterium, or tritium.

In an exemplary embodiment of the present specification, a portion wherein a substituent is not indicated in Chemical Formula 1 may mean that hydrogen, deuterium, or tritium is substituted.

Hereinafter, preferred exemplary embodiments of the present invention will be described in detail. However, the exemplary embodiments of the present invention may be modified into various other forms, and the scope of the present invention is not limited to the exemplary embodiments which will be described below.

According to an exemplary embodiment of the present specification, one or more units of Chemical Formula 1 can be included in the polycarbonate resin, and when two or more are included, the units are the same as or different from each other.

According to an exemplary embodiment of the present specification, the polycarbonate resin further includes any one or more units of the following Chemical Formulae 2-1 to 2-3.

[Chemical Formula 2-1]

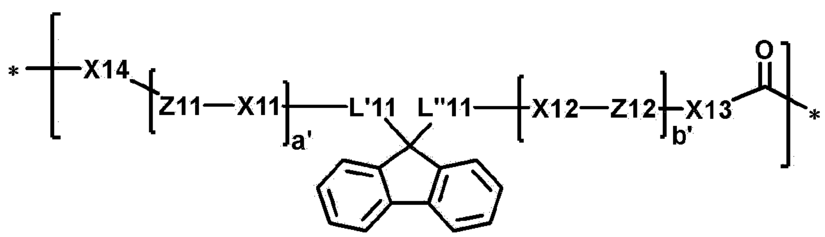

[Chemical Formula 2-2]

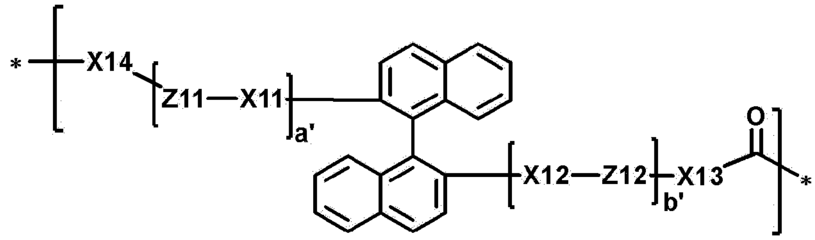

[Chemical Formula 2-3]

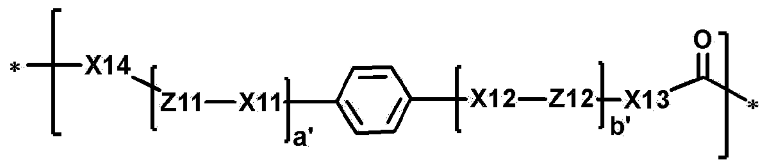

In Chemical Formulae 2-1 to 2-3,

L'11 and L"11 are the same as or different from each other, and are each independently a substituted or unsubstituted alkylene group; a substituted or unsubstituted cycloalkylene group; or a substituted or unsubstituted arylene group,
l11 is an integer from 1 to 5, and when l11 is 2 or higher, two or more L11's are the same as or different from each other,
X11 to X14 are the same as or different from each other, and are each independently O; or S,
Z11 and Z12 are the same as or different from each other, and are each independently a substituted or unsubstituted alkylene group; or a substituted or unsubstituted cycloalkylene group,
a' and b' are the same as or different from each other, and are each independently an integer from 0 to 10, and when a' and b' are each independently 2 or higher, structures in each parenthesis are the same as or different from each other, and
* means a moiety linked to the main chain of the resin.

According to an exemplary embodiment of the present specification, R101 is hydrogen.
According to an exemplary embodiment of the present specification, R102 is hydrogen.
According to an exemplary embodiment of the present specification, Chemical Formula 1 is the following Chemical Formula 1-1.

[Chemical Formula 1-1]

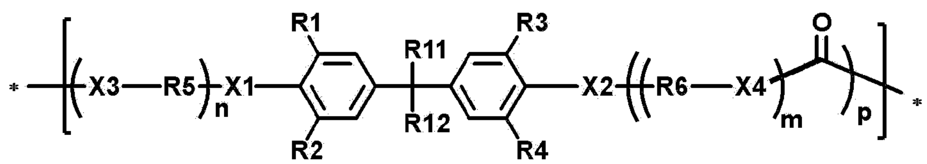

In Chemical Formula 1-1,
the definitions of *, m, n, p, R1 to R6, R11, R12 and X1 to X4 are the same as those defined in Chemical Formula 1.
According to an exemplary embodiment of the present specification, X1 to X4 are the same as or different from each other, and are each independently O or S,

R1 and R3 are the same as or different from each other, and are each independently a phenyl group which is substituted with a cyano group, or a straight-chained or branched alkyl group having 1 to 30 carbon atoms; a monocyclic or polycyclic aryl group having 10 to 30 carbon atoms, which is unsubstituted or substituted with a cyano group, a straight-chained or branched alkyl group having 1 to 30 carbon atoms, a straight-chained or branched

alkenyl group having 2 to 30 carbon atoms, or a monocyclic or polycyclic heterocyclic group having 2 to 30 carbon atoms; a condensed ring group of a monocyclic or polycyclic aromatic hydrocarbon ring having 6 to 30 carbon atoms and a monocyclic or polycyclic aliphatic hydrocarbon ring having 3 to 30 carbon atoms; or a polycyclic heteroaryl group having 6 to 30 carbon atoms,

R2 and R4 are the same as or different from each other, and are each independently hydrogen; a straight-chained or branched alkyl group having 1 to 30 carbon atoms; a monocyclic or polycyclic cycloalkyl group having 6 to 30 carbon atoms; a monocyclic or polycyclic aryl group having 6 to 30 carbon atoms, which is unsubstituted or substituted with a cyano group, a straight-chained or branched alkyl group having 1 to 30 carbon atoms, a straight-chained or branched alkenyl group having 2 to 30 carbon atoms, or a monocyclic or polycyclic heterocyclic group having 2 to 30 carbon atoms; a condensed ring group of a monocyclic or polycyclic aromatic hydrocarbon ring having 6 to 30 carbon atoms and a monocyclic or polycyclic aliphatic hydrocarbon ring having 3 to 30 carbon atoms; or a polycyclic heteroaryl group having 6 to 30 carbon atoms,

R5 and R6 are the same as or different from each other, and are each independently a straight-chained or branched alkylene group having 2 to 30 carbon atoms; or a monocyclic or polycyclic cycloalkylene group having 6 to 30 carbon atoms, and

R11 and R12 are the same as or different from each other, and are each independently a straight-chained or branched alkyl group having 1 to 30 carbon atoms; a monocyclic or polycyclic cycloalkyl group having 6 to 30 carbon atoms; a monocyclic or polycyclic aryl group having 6 to 30 carbon atoms; or a monocyclic or polycyclic heteroaryl group having 2 to 30 carbon atoms, or are bonded to each other to form a polycyclic aromatic hydrocarbon ring having 10 to 30 carbon atoms.

According to an exemplary embodiment of the present specification, R1 to R4 are the same as or different from each other, and are each independently any one of the following structures.

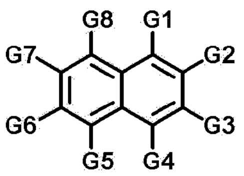
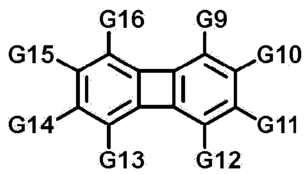
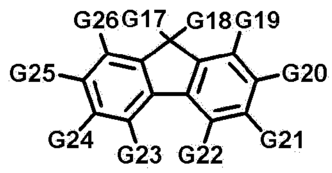
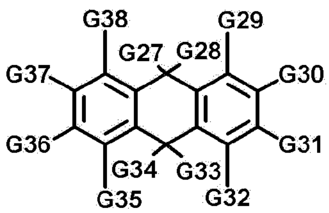
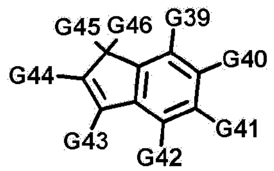
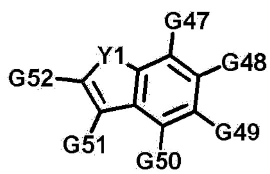
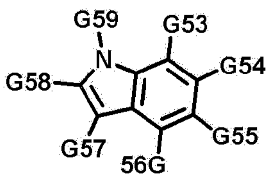
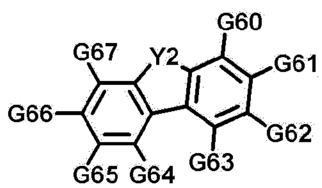
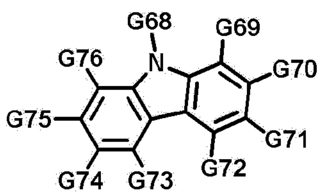

In the structures,

Y1 and Y2 are each independently O or S,

any one of G1 to G8 is a moiety bonded to Chemical Formula 1, and the others of G1 to G8, which are not bonded to Chemical Formula 1, are the same as or different from each other, and are each independently hydrogen; a substituted or unsubstituted alkyl group; a substituted or unsubstituted alkenyl group; a substituted or unsubstituted hydrocarbon ring group; or a substituted or unsubstituted heterocyclic group,

any one of G9 to G16 is a moiety bonded to Chemical Formula 1, and the others of G9 to G16, which are not bonded to Chemical Formula 1, are the same as or different from each other, and are each independently hydrogen; a substituted or unsubstituted alkyl group; a substituted or unsubstituted alkenyl group; a substituted or unsubstituted hydrocarbon ring group; or a substituted or unsubstituted heterocyclic group,

any one of G17 to G26 is a moiety bonded to Chemical Formula 1, and the others of G17 to G26, which are not bonded to Chemical Formula 1, are the same as or different from each other, and are each independently hydrogen; a substituted or unsubstituted alkyl group; a substituted or unsubstituted alkenyl group; a substituted or unsubstituted hydrocarbon ring group; or a substituted or unsubstituted heterocyclic group,

any one of G27 to G38 is a moiety bonded to Chemical Formula 1, and the others of G27 to G38, which are not bonded to Chemical Formula 1, are the same as or different from each other, and are each independently hydrogen; a substituted or unsubstituted alkyl group; a substituted or unsubstituted alkenyl group; a substituted or unsubstituted hydrocarbon ring group; or a substituted or unsubstituted heterocyclic group,

any one of G39 to G46 is a moiety bonded to Chemical Formula 1, and the others of G39 to G46, which are not bonded to Chemical Formula 1, are the same as or different from each other, and are each independently hydrogen; a substituted or unsubstituted alkyl group; a substituted or unsubstituted alkenyl group; a substituted or unsubstituted hydrocarbon ring group; or a substituted or unsubstituted heterocyclic group,

any one of G47 to G52 is a moiety bonded to Chemical Formula 1, and the others of G47 to G52, which are not bonded to Chemical Formula 1, are the same as or different from each other, and are each independently hydrogen; a substituted or unsubstituted alkyl group; a substituted or unsubstituted alkenyl group; a substituted or unsubstituted hydrocarbon ring group; or a substituted or unsubstituted heterocyclic group,

any one of G53 to G59 is a moiety bonded to Chemical Formula 1, and the others of G53 to G59, which are not bonded to Chemical Formula 1, are the same as or different from each other, and are each independently hydrogen; a substituted or unsubstituted alkyl group; a substituted or unsubstituted alkenyl group; a substituted or unsubstituted hydrocarbon ring group; or a substituted or unsubstituted heterocyclic group,

any one of G60 to G67 is a moiety bonded to Chemical Formula 1, and the others of G60 to G67, which are not bonded to Chemical Formula 1, are the same as or different from each other, and are each independently hydrogen; a substituted or unsubstituted alkyl group; a substituted or unsubstituted alkenyl group; a substituted or unsubstituted hydrocarbon ring group; or a substituted or unsubstituted heterocyclic group, and

any one of G68 to G76 is a moiety bonded to Chemical Formula 1, and the others of G68 to G73, which are not bonded to Chemical Formula 1, are the same as or different from each other, and are each independently hydrogen; a substituted or unsubstituted alkyl group; a substituted or unsubstituted alkenyl group; a substituted or unsubstituted hydrocarbon ring group; or a substituted or unsubstituted heterocyclic group.

According to an exemplary embodiment of the present specification, X1 is O.

According to an exemplary embodiment of the present specification, X2 is O.

According to an exemplary embodiment of the present specification, X3 is O.

According to an exemplary embodiment of the present specification, X4 is O.

According to an exemplary embodiment of the present specification, X1 is S.

According to an exemplary embodiment of the present specification, X2 is S.

According to an exemplary embodiment of the present specification, X3 is S.

According to an exemplary embodiment of the present specification, X4 is S.

According to an exemplary embodiment of the present specification, R1 and R3 are the same as or different from each other, and are each independently a phenyl group which is substituted with a cyano group, or a substituted or unsubstituted straight-chained or branched alkyl group having 1 to 30 carbon atoms; a substituted or unsubstituted monocyclic or polycyclic aryl group having 10 to 30 carbon atoms; a condensed ring group of a substituted or unsubstituted monocyclic or polycyclic aromatic hydrocarbon ring having 6 to 30 carbon atoms and a monocyclic or polycyclic aliphatic hydrocarbon ring having 3 to 30 carbon atoms; or a substituted or unsubstituted polycyclic heteroaryl group having 6 to 30 carbon atoms.

According to an exemplary embodiment of the present specification, R1 and R3 are the same as or different from each other, and are each independently a phenyl group which is substituted with a cyano group, or a straight-chained or branched alkyl group having 1 to 30 carbon atoms; a monocyclic or polycyclic aryl group having 10 to 30 carbon atoms, which is unsubstituted or substituted with a cyano group, a straight-chained or branched alkyl group having 1 to 30 carbon atoms, a straight-chained or branched alkenyl group having 2 to 30 carbon atoms, or a monocyclic or polycyclic heterocyclic group having 2 to 30 carbon atoms; a condensed ring group of a monocyclic or polycyclic aromatic hydrocarbon ring having 6 to 30 carbon atoms and a monocyclic or polycyclic aliphatic hydrocarbon ring having 3 to 30 carbon atoms; or a polycyclic heteroaryl group having 6 to 30 carbon atoms.

According to an exemplary embodiment of the present specification, R1 and R3 are the same as or different from each other, and are each independently a phenyl group which is substituted with a cyano group, or a methyl group; a naphthyl group which is unsubstituted or substituted with a cyano group; a dihydroindene group; or a quinoline group.

According to an exemplary embodiment of the present specification, R2 and R4 are the same as or different from each other, and are each independently hydrogen; a substituted or unsubstituted straight-chained or branched alkyl group having 1 to 30 carbon atoms; a substituted or unsubstituted monocyclic or polycyclic cycloalkyl group having

6 to 30 carbon atoms; a substituted monocyclic aryl group having 6 to 30 carbon atoms; a substituted or unsubstituted polycyclic aryl group having 10 to 30 carbon atoms; a substituted or unsubstituted condensed ring group of a monocyclic or polycyclic aromatic hydrocarbon ring having 6 to 30 carbon atoms and a monocyclic or polycyclic aliphatic hydrocarbon ring having 3 to 30 carbon atoms; or a substituted or unsubstituted polycyclic heteroaryl group having 6 to 30 carbon atoms.

According to an exemplary embodiment of the present specification, R2 and R4 are the same as or different from each other, and are each independently hydrogen; a straight-chained or branched alkyl group having 1 to 30 carbon atoms; a monocyclic or polycyclic cycloalkyl group having 6 to 30 carbon atoms; a monocyclic or polycyclic aryl group having 6 to 30 carbon atoms, which is unsubstituted or substituted with a cyano group, a straight-chained or branched alkyl group having 1 to 30 carbon atoms, a straight-chained or branched alkenyl group having 2 to 30 carbon atoms, or a monocyclic or polycyclic heterocyclic group having 2 to 30 carbon atoms; a condensed ring group of a monocyclic or polycyclic aromatic hydrocarbon ring having 6 to 30 carbon atoms and a monocyclic or polycyclic aliphatic hydrocarbon ring having 3 to 30 carbon atoms; or a polycyclic heteroaryl group having 6 to 30 carbon atoms.

According to an exemplary embodiment of the present specification, R2 and R4 are the same as or different from each other, and are each independently a monocyclic or polycyclic aryl group having 6 to 30 carbon atoms, which is unsubstituted or substituted with a cyano group, a straight-chained or branched alkyl group having 1 to 30 carbon atoms, a straight-chained or branched alkenyl group having 2 to 30 carbon atoms, or a monocyclic or polycyclic heterocyclic group having 2 to 30 carbon atoms; a condensed ring group of a monocyclic or polycyclic aromatic hydrocarbon ring having 6 to 30 carbon atoms and a monocyclic or polycyclic aliphatic hydrocarbon ring having 3 to 30 carbon atoms; or a polycyclic heteroaryl group having 6 to 30 carbon atoms.

According to an exemplary embodiment of the present specification, R2 and R4 are the same as or different from each other, and are each independently a phenyl group which is unsubstituted or substituted with a cyano group, or a methyl group; a naphthyl group which is unsubstituted or substituted with a cyano group; a dihydroindene group; or a quinoline group.

According to an exemplary embodiment of the present specification, R5 and R6 are the same as or different from each other, and are each independently a substituted or unsubstituted straight-chained or branched alkylene group having 2 to 30 carbon atoms; or a substituted or unsubstituted monocyclic or polycyclic cycloalkylene group having 6 to 30 carbon atoms.

According to an exemplary embodiment of the present specification, R5 and R6 are the same as or different from each other, and are each independently a straight-chained or branched alkylene group having 2 to 30 carbon atoms; or a monocyclic or polycyclic cycloalkylene group having 6 to 30 carbon atoms.

According to an exemplary embodiment of the present specification, R5 and R6 are an ethylene group.

According to an exemplary embodiment of the present specification, R11 and R12 are the same as or different from each other, and are each independently a substituted or unsubstituted straight-chained or branched alkyl group having 1 to 30 carbon atoms; a substituted or unsubstituted monocyclic or polycyclic cycloalkyl group having 6 to 30 carbon atoms; a monocyclic or polycyclic aryl group having 6 to 30 carbon atoms; or a substituted or unsubstituted monocyclic or polycyclic heteroaryl group having 2 to 30 carbon atoms, or are bonded to each other to form a substituted or unsubstituted polycyclic aromatic hydrocarbon ring having 10 to 30 carbon atoms.

According to an exemplary embodiment of the present specification, R11 and R12 are the same as or different from each other, and are each independently a straight-chained or branched alkyl group having 1 to 30 carbon atoms; a monocyclic or polycyclic cycloalkyl group having 6 to 30 carbon atoms; a monocyclic or polycyclic aryl group having 6 to 30 carbon atoms; or a monocyclic or polycyclic heteroaryl group having 2 to 30 carbon atoms, or are bonded to each other to form a polycyclic aromatic hydrocarbon ring having 10 to 30 carbon atoms.

According to an exemplary embodiment of the present specification, R11 and R12 are a methyl group.

According to an exemplary embodiment of the present specification, X11 to X14 are O.

L'll and L"11 are the same as or different from each other, and are each independently a monocyclic or polycyclic alkylene group having 1 to 30 carbon atoms; or a monocyclic or polycyclic arylene group having 6 to 50 carbon atoms, which is unsubstituted or substituted with a straight-chained or branched alkyl group having 1 to 30 carbon atoms or a monocyclic or polycyclic aryl group having 6 to 30 carbon atoms, and

Z11 and Z12 are the same as or different from each other, and are each independently a straight-chained or branched alkylene group having 1 to 30 carbon atoms.

According to an exemplary embodiment of the present specification, L'll and L"11 are the same as or different from each other, and are each independently a monocyclic or polycyclic alkylene group having 1 to 30 carbon atoms; or a monocyclic or polycyclic arylene group having 6 to 50 carbon atoms, which is unsubstituted or substituted with a straight-chained or branched alkyl group having 1 to 30 carbon atoms, or a monocyclic or polycyclic aryl group having 6 to 30 carbon atoms.

According to an exemplary embodiment of the present specification, L'll and L"11 are the same as or different from each other, and are each independently a monocyclic or polycyclic alkylene group having 1 to 20 carbon atoms; or a monocyclic or polycyclic arylene group having 6 to 30 carbon atoms, which is unsubstituted or substituted with a

straight-chained or branched alkyl group having 1 to 20 carbon atoms, or a monocyclic or polycyclic aryl group having 6 to 20 carbon atoms.

According to an exemplary embodiment of the present specification, L'll and L"11 are the same as or different from each other, and are each independently a methylene group which is unsubstituted or substituted with a methyl group; an isopropylene group; a phenylene group which is unsubstituted or substituted with a methyl group or a phenyl group; a divalent naphthalene group; or a divalent fluorene group.

According to an exemplary embodiment of the present specification, X11 is O.

According to an exemplary embodiment of the present specification, X12 is O.

According to an exemplary embodiment of the present specification, X13 is O.

According to an exemplary embodiment of the present specification, X14 is O.

According to an exemplary embodiment of the present specification, Z11 and Z12 are the same as or different from each other, and are each independently a straight-chained or branched alkylene group having 1 to 30 carbon atoms.

According to an exemplary embodiment of the present specification, Z11 and Z12 are the same as or different from each other, and are each independently a straight-chained or branched alkylene group having 1 to 20 carbon atoms.

According to an exemplary embodiment of the present specification, Z11 and Z12 are an ethylene group.

According to an exemplary embodiment of the present specification, a' is 1.

According to an exemplary embodiment of the present specification, b' is 1.

According to an exemplary embodiment of the present specification, a' is 0.

According to an exemplary embodiment of the present specification, b' is 0.

According to an exemplary embodiment of the present specification, the polycarbonate resin may have -OH; -SH; - Cl; $-CO_2CH_3$; or $-OC_6H_5$ as an end group.

In an exemplary embodiment of the present specification, the polycarbonate resin has a weight average molecular weight of 5,000g/mol to 500,000 g/mol, preferably 6,000 g/mol to 300,000 g/mol, 7,000 g/mol to 250,000 g/mol, 8,000 g/mol to 200,000 g/mol. The polycarbonate resin has a weight average molecular weight of more preferably 9,000 g/mol to 150,000 g/mol, 10,000 g/mol to 100,000 g/mol, 12,000 g/mol to 80,000 g/mol, and 13,000 g/mol to 60,000 g/mol.

When the polycarbonate resin satisfies the above-described weight average molecular weight range, the polycarbonate resin may have optimum fluidity and processability.

In an exemplary embodiment of the present invention, the polycarbonate resin has a number average molecular weight of 3,000g/mol to 300,000 g/mol, 3,500g/mol to 200,000 g/mol, 4,000 g/mol to 150,000 g/mol, 4,500g/mol to 100,000 g/mol, preferably 5,000g/mol to 80,000 g/mol.

In the present specification, the weight average molecular weights (Mws) of the polycarbonate resin and the oligomer used in the preparation thereof may be measured by gel permeation chromatography (GPC) using a polystyrene (PS) standard using Agilent 1200 series. Specifically, the weight average molecular weights may be measured using an Agilent 1200 series device using a Polymer Laboratories PLgel MIX-B 300 mm length column, and in this case, the measurement temperature is 40°C, the used solvent is tetrahydrofuran (THF), and the flow rate is 1 mL/min. The sample of the polycarbonate resin or oligomer is each prepared at a concentration of 10 mg/10 mL, and then fed in an amount of 10 $\mu$L, and the weight average molecular weight (Mw) value is induced using a calibration curve formed using a polystyrene standard. In this case, nine types of polystyrene standard products with a molecular weight (g/mol) of 2,000 / 10,000 / 30,000 / 70,000 / 200,000 / 700,000 / 2,000,000 / 4,000,000 / 10,000,000 are used.

In an exemplary embodiment of the present specification, the polycarbonate resin may have a glass transition temperature (Tg) of 100°C to 200°C. Further, the glass transition temperature may be 110°C to 190°C. The glass transition temperature may be preferably 120°C to 180°C, 120°C to 170°C, 130°C to 160°C, and 131°C to 166°C.

When the polycarbonate resin satisfies the above glass transition temperature range, the glass transition temperature is easily adjusted when a polycarbonate resin composition is prepared by mixing with a resin having excellent heat resistance and injectability and having a glass transition temperature different from the above-described range, so that the physical properties desired in the present specification may be satisfied.

The glass transition temperature (Tg) may be measured by a differential scanning calorimeter (DSC). Specifically, the glass transition temperature may be measured from a graph obtained by heating 5.5 mg to 8.5 mg of the polycarbonate resin sample to 270°C under a nitrogen atmosphere, and then scanning the resin sample while heating the resin sample at a heating rate of 10°C/min during the second heating after cooling.

In an exemplary embodiment of the present specification, a refractive index of the polycarbonate resin, which is measured at a wavelength of 587 nm, is 1.50 to 1.75. The refractive index may be preferably 1.65 to 1.712, and more preferably 1.661 to 1.720. When the resin satisfies the above refractive index, a thin and light optical lens can be manufactured when the resin is applied to a molded article such as an optical lens.

In an exemplary embodiment of the present specification, the Abbe's Number of the resin, which is measured and calculated at a wavelength of 486, 587, and 656 nm may be 5 to 45. In addition, the Abbe's Number may be 14 to 20. The Abbe's Number may be preferably 14.5 to 19.5, and more preferably 12.95 to 19.50. When the resin satisfies the above Abbe's Number range, there is an effect that the dispersion is decreased and the sharpness is increased

when the resin is applied to a molded article such as an optical lens.

The Abbe's Number may specifically be obtained by the following Equation by measuring the refractive index ($n_D$, $n_F$, and $n_C$) at a wavelength of D (587 nm), F (486 nm), and C (656 nm), respectively at 20°C.

$$\text{Abbe's Number} = (n_D-1)/(n_F - n_C)$$

The refractive index and the Abbe's Number may be measured from a film prepared by applying a solution prepared by dissolving the resin in a solvent to a silicon wafer by spin-coating, and may be measured by obtaining the result value according to the wavelength of light using an ellipsometer at 20°C for the applied film. The solution may be applied by the spin-coating at a rotation speed of 150 rpm to 300 rpm, and the applied film may have a thickness of 5 um to 20 um. The silicon wafer is not particularly limited, and any silicon wafer that can measure the refractive index and the Abbe's Number of the resin composition according to the present specification may be appropriately adopted. The solvent may be dimethylacetamide or 1,2-dichlorobenzene, and the solution may be prepared by dissolving the resin sample in an amount of 10 wt% based on the total weight of the solution.

An exemplary embodiment of the present invention provides a method for preparing a polycarbonate resin, the method including: polymerizing a composition for preparing the polycarbonate resin, which includes a compound of the following Chemical Formula 1a; and a polycarbonate precursor.

[Chemical Formula 1a]

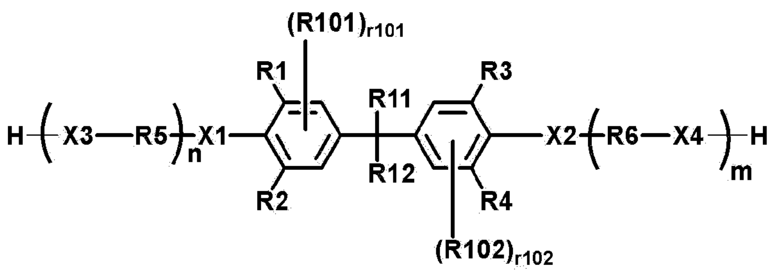

In Chemical Formula 1a,
the definitions of m, n, R1 to R6, R11, R12, R101, R102, r101, r102 and X1 to X4 are the same as those defined in Chemical Formula 1.

According to an exemplary embodiment of the present specification, the method for preparing the polycarbonate resin further includes any one or more second compounds of the following Chemical Formulae 2a-1 to 2a-3, and the compound of Chemical Formula 1a and the second compound are included at a ratio of 0.01 mole% to 100 mole% : 99.99 mole% to 0 mole%. Specifically, the compound of Chemical Formula 1a and the second compound are included at a ratio of 0.01 mole% to 99.99 mole% : 99.99 mole% to 0.01mole%. More specifically, the compound of Chemical Formula 1a and the second compound are included at a ratio of 0.1 mole% to 99.9 mole% : 99.9 mole% to 0.1 mole%, 1 mole% to 99 mole% : 99 mole% to 1 mole%, 5 mole% to 95 mole% : 95 mole% to 5 mole%, and 10 mole% to 90 mole% : 90 mole% to 10 mole%.

[Chemical Formula 2a-1]

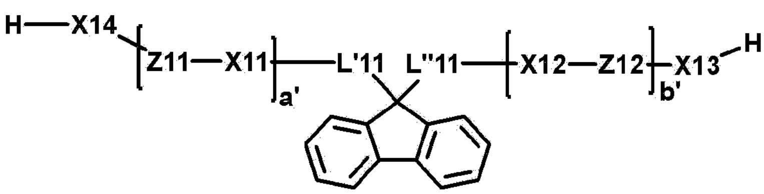

[Chemical Formula 2a-2]

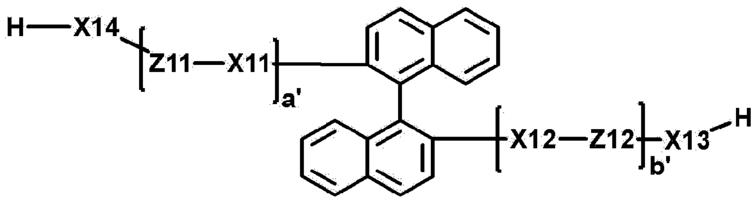

[Chemical Formula 2a-3]

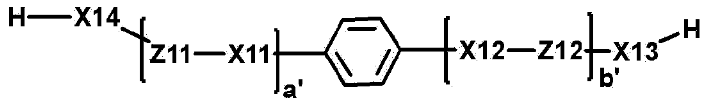

In Chemical Formulae 2a-1 to 2a-3,

L'll and L"11 are the same as or different from each other, and are each independently a substituted or unsubstituted alkylene group; a substituted or unsubstituted cycloalkylene group; or a substituted or unsubstituted arylene group,
X11 to X14 are the same as or different from each other, and are each independently O; or S,
Z11 and Z12 are the same as or different from each other, and are each independently a substituted or unsubstituted alkylene group; or a substituted or unsubstituted cycloalkylene group, and
a' and b' are the same as or different from each other, and are each independently an integer from 0 to 10, and when a' and b' are each independently 2 or higher, structures in each parenthesis are the same as or different from each other.

When Chemical Formula 1a and the second compound are included in the above contents, the compounds are easily polymerized, have a wide range of refractive indices or a high refractive index depending on the substituent, and have a wide range of glass transition temperatures. Furthermore, the glass transition temperature (Tg) and refractive index can be adjusted, and the chain behavior of the polycarbonate resin can be made flexible, so that there is a technical effect advantageous for the injection processing of a molded article.

An exemplary embodiment of the present invention provides a method for preparing a polycarbonate resin, the method including: polymerizing a composition for preparing the polycarbonate resin, which includes the compound of Chemical Formula 1a; the second compound; and a polycarbonate precursor. The compound of Chemical Formula 1a and the second compound are included at a ratio of 0.01 mole% to 100 mole%: 99.99 mole% to 0 mole%. Specifically, the compound of Chemical Formula 1a and the second compound are included at a ratio of 0.01 mole% to 99.99 mole% : 99.99 mole% to 0.01 mole%. More specifically, the compound of Chemical Formula 1a and the second compound are included at a ratio of 0.1 mole% to 99.9 mole% : 99.9 mole% to 0.1 mole%, 1 mole% to 99 mole% : 99 mole% to 1 mole%, 5 mole% to 95 mole% : 95 mole% to 5 mole%, and 10 mole% to 90 mole% : 90 mole% to 10 mole%.

When Chemical Formula 1a and the second compound are included in the above contents, the compounds are easily polymerized, have a wide range of refractive indices or a high refractive index depending on the substituent, and have a wide range of glass transition temperatures. Furthermore, the glass transition temperature (Tg) and refractive index can be adjusted, and the chain behavior of the polycarbonate resin can be made flexible, so that there is a technical effect advantageous for the injection processing of a molded article.

The composition for preparing a polycarbonate resin may further include a solvent.

The solvent may be, for example, diphenyl ether, dimethylacetamide or methanol, but is not limited thereto, and any solvent applied in the art may be appropriately adopted.

The solvent may be included in an amount of 5 parts by weight to 60 parts by weight with respect to 100 parts by weight of the composition for preparing a resin.

The solvent may be included in an amount of preferably 5 parts by weight to 50 parts by weight, 7 parts by weight to 45 parts by weight or 8 parts by weight to 40 parts by weight with respect to 100 parts by weight of the composition for preparing a resin.

According to an exemplary embodiment of the present specification, two or more of Chemical Formula 1a may be included. Two or more of Chemical Formula 1a are the same as or different from each other.

In an exemplary embodiment of the present specification, the compound of Chemical Formula 1a may be any one of the following compounds, but is not limited thereto.

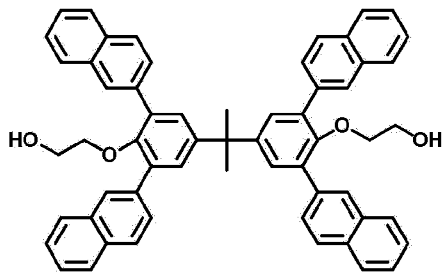

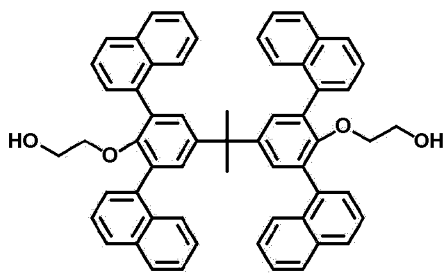

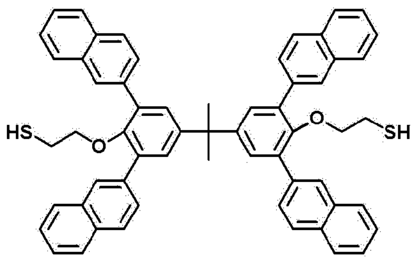

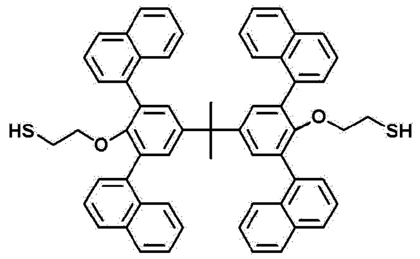

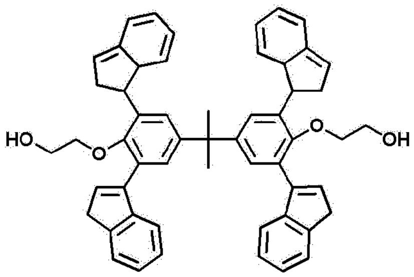

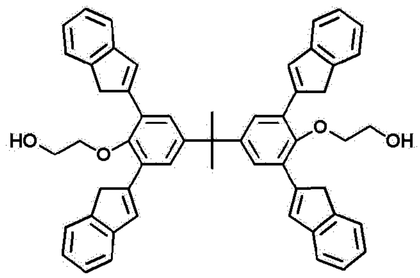

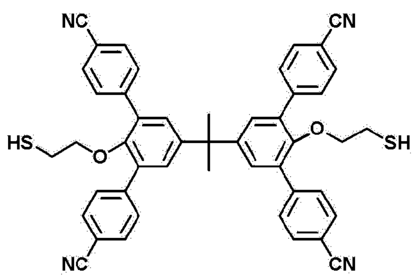

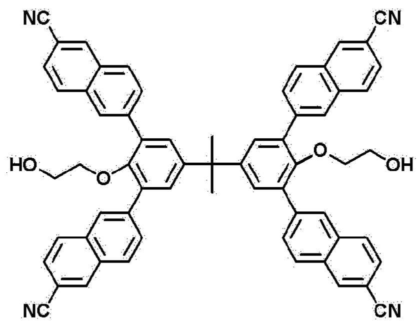

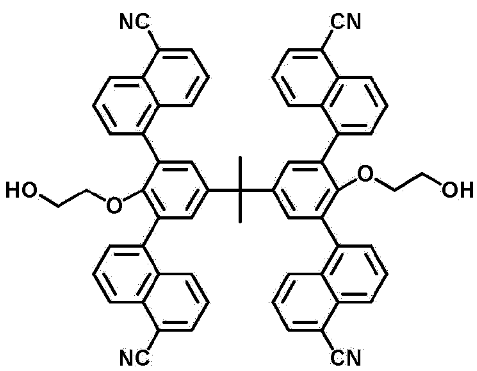

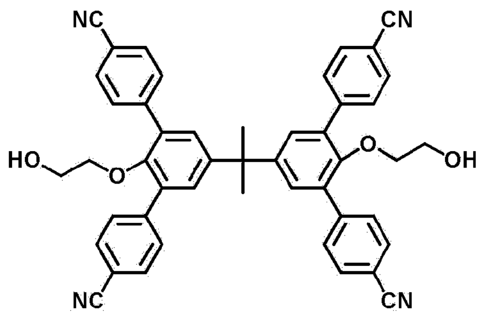

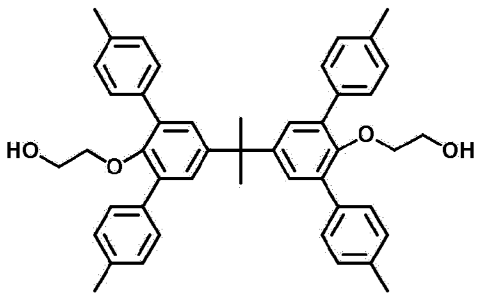

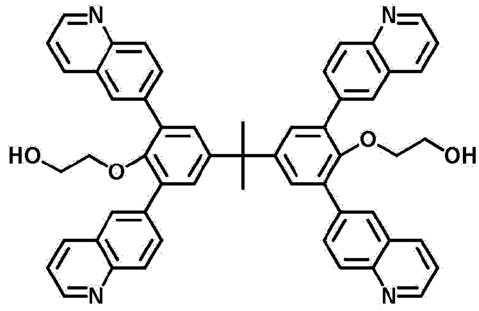

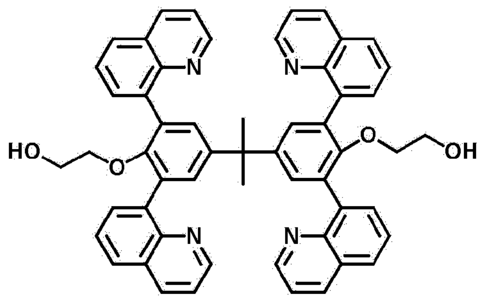

In an exemplary embodiment of the present specification, the second compound may be any one or more of the following compounds, but is not limited thereto.

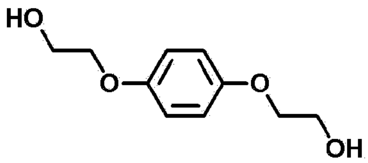

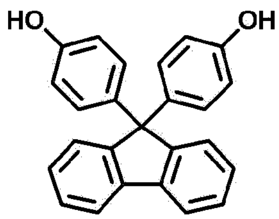

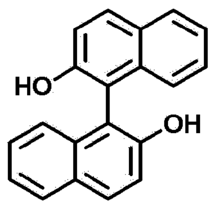

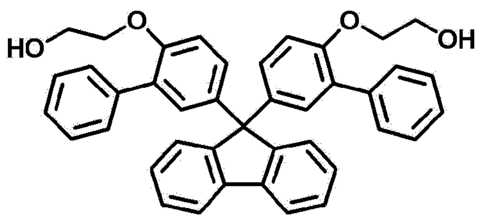

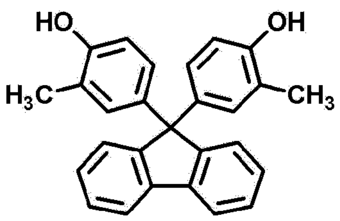

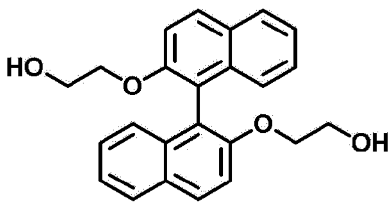

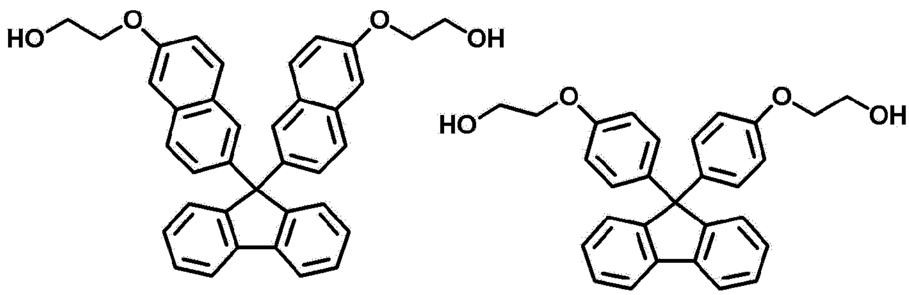

In an exemplary embodiment of the present specification, Chemical Formula 2a-1 is any one of the following compounds.

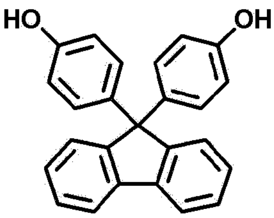

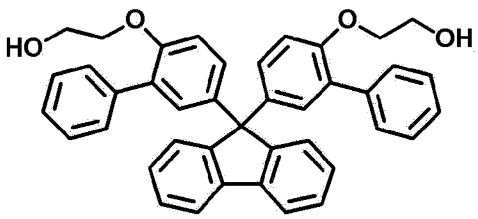

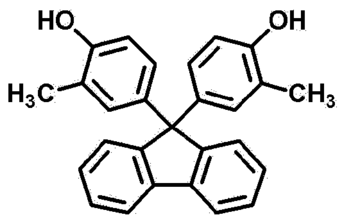

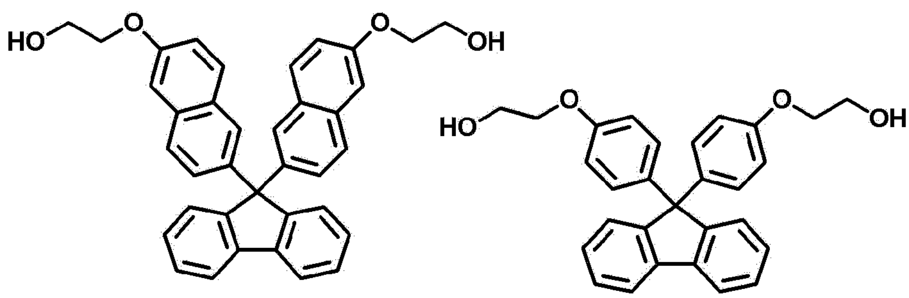

In an exemplary embodiment of the present specification, Chemical Formula 2a-2 is any one of the following compounds.

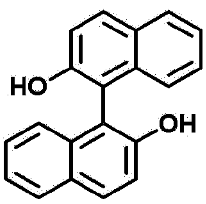

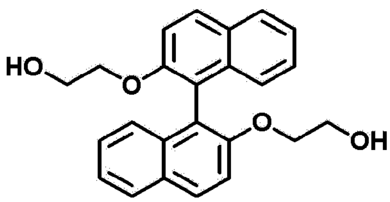

In an exemplary embodiment of the present specification, Chemical Formula 2a-3 is the following compound.

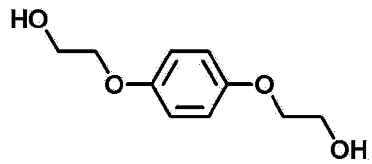

In an exemplary embodiment of the present specification, the compound of Chemical Formula 1a may be included in an amount of 1 part by weight to 100 parts by weight with respect to 100 parts by weight of the composition for preparing a polycarbonate resin.

Even more specifically, the compound of Chemical Formula 1a may be included in an amount of preferably 1 to 60 parts by weight, 1 to 50 parts by weight, 1 to 40 parts by weight, 1 to 30 parts by weight, 1 to 20 parts by weight or 1 to 10 parts by weight with respect to 100 parts by weight of the composition for preparing a polycarbonate resin.

In an exemplary embodiment of the present specification, the second compound may be included in an amount of 0 part by weight to 99 parts by weight, or 1 part by weight to 99 parts by weight with respect to 100 parts by weight of the composition for preparing a polycarbonate resin.

The second compound may be included in an amount of preferably 1 to 60 parts by weight, 1 to 50 parts by weight, 1 to 40 parts by weight, 1 to 30 parts by weight, 1 to 20 parts by weight or 1 to 10 parts by weight with respect to 100 parts by weight of the composition for preparing a polycarbonate resin.

In an exemplary embodiment of the present specification, the polycarbonate precursor may be included in an amount of 1 part by weight to 60 parts by weight with respect to 100 parts by weight of the composition for preparing a polycarbonate resin.

The polycarbonate precursor may be included in an amount of preferably 1 to 60 parts by weight, 1 to 55 parts by weight, 1 to 50 parts by weight, 1 to 45 parts by weight or 1 to 40 parts by weight with respect to 100 parts by weight of the composition for preparing a polycarbonate resin.

According to an exemplary embodiment of the present specification, the polycarbonate precursor is the following Chemical Formula A.

[Chemical Formula A]

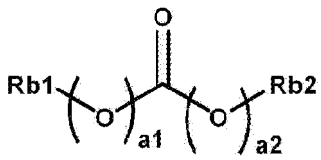

In Chemical Formula A,

Rb1 and Rb2 are the same as or different from each other, and are each independently a halogen group; a substituted or unsubstituted alkyl group; a substituted or unsubstituted cycloalkyl group; or a substituted or unsubstituted aryl group, and
a1 and a2 are each 0 or 1.

According to an exemplary embodiment of the present specification, Rb1 and Rb2 are the same as or different from each other, and are each independently a halogen group; a substituted or unsubstituted straight-chained or branched alkyl group having 1 to 30 carbon atoms; a substituted or unsubstituted monocyclic or polycyclic cycloalkyl group having 6 to 30 carbon atoms; or a substituted or unsubstituted monocyclic or polycyclic aryl group having 6 to 30 carbon atoms.

According to an exemplary embodiment of the present specification, Rb1 and Rb2 are the same as or different from each other, and are each independently a halogen group; a substituted or unsubstituted straight-chained or branched alkyl group having 1 to 20 carbon atoms; a substituted or unsubstituted monocyclic or polycyclic cycloalkyl group having 6 to 20 carbon atoms; or a substituted or unsubstituted monocyclic or polycyclic aryl group having 6 to 20 carbon atoms.

According to an exemplary embodiment of the present specification, Rb1 and Rb2 are the same as or different from each other, and are each independently a halogen group; a straight-chained or branched alkyl group having 1 to 30 carbon atoms; a monocyclic or polycyclic cycloalkyl group having 6 to 30 carbon atoms; or a monocyclic or polycyclic aryl group having 6 to 30 carbon atoms.

According to an exemplary embodiment of the present specification, Rb1 and Rb2 are the same as or different from each other, and are each independently a halogen group; a straight-chained or branched alkyl group having 1 to

20 carbon atoms; a monocyclic or polycyclic cycloalkyl group having 6 to 20 carbon atoms; or a monocyclic or polycyclic aryl group having 6 to 20 carbon atoms.

According to an exemplary embodiment of the present specification, Rb1 and Rb2 are the same as or different from each other, and are each independently -Cl; a methyl group; an ethyl group; an n-propyl group; an n-butyl group; an isopropyl group; an isobutyl group; or a phenyl group.

According to an exemplary embodiment of the present specification, Chemical Formula A is any one selected from the following compounds.

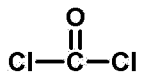

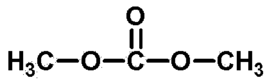

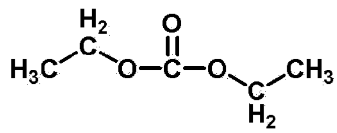

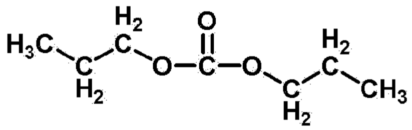

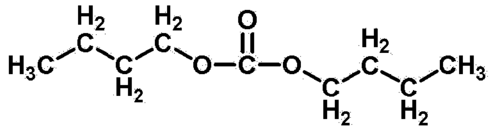

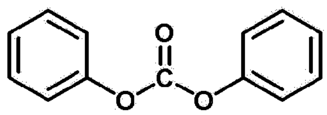

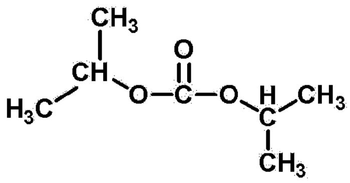

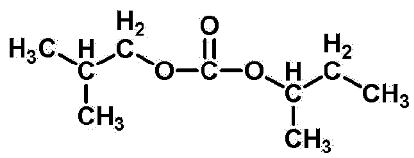

The polycarbonate precursor serves to link an additional comonomer, if necessary, and other specific examples thereof which may be applied in addition to the compound of Chemical Formula A include phosgene, triphosgene, diphosgene, bromophosgene, dimethyl carbonate, diethyl carbonate, dibutyl carbonate, dicyclohexyl carbonate, ditolyl carbonate, bis(chlorophenyl) carbonate, m-cresyl carbonate, dinaphthyl carbonate, bis(diphenyl) carbonate, bishaloformate, or the like, and any one of them or a mixture of two or more thereof may be used.

In an exemplary embodiment of the present specification, it is preferred that the polycarbonate resin is polymerized from the compound of Chemical Formula 1a; and the polycarbonate precursor of Chemical Formula A.

In an exemplary embodiment of the present specification, it is preferred that the polycarbonate resin is polymerized from the compound of Chemical Formula 1a; the second compound and the polycarbonate precursor of Chemical Formula A.

The unit of the above-described Chemical Formula 1 may be formed by polymerizing the compound of Chemical Formula 1a and the polycarbonate precursor of Chemical Formula A, and any one or more units of the above-described Chemical Formulae 2-1 to 2-3 may be formed by polymerizing the second compound and the polycarbonate precursor of Chemical Formula A.

By polymerizing the compound of Chemical Formula 1a and the polycarbonate precursor of Chemical Formula A, the unit of the above-described Chemical Formula 1 may be formed.

The compound of Chemical Formula 1a may be used in an amount of 1 part by mol to 100 parts by mol, and 1 part by mol to 99 parts by mol with respect to 100 parts by mol of the entire monomer constituting the polycarbonate resin including the unit of Chemical Formula 1.

The polycarbonate precursor of Chemical Formula A may be used in an amount of 50 parts by mol to 150 parts by mol with respect to 100 parts by mol of the entire monomer of the compound of Chemical Formula 1a constituting the resin.

By polymerizing the second compound and the polycarbonate precursor of Chemical Formula A, any one or more units of the above-described Chemical Formulae 2-1 to 2-3 may be formed.

The second compound may be used in an amount of 1 part by mol to 100 parts by mol, 1 part by mol to 99 parts by mol with respect to 100 parts by mol of the entire monomer constituting the polycarbonate resin including any one or more units of Chemical Formulae 2-1 to 2-3.

The polycarbonate precursor of Chemical Formula A may be used in an amount of 50 parts by mol to 150 parts by mol with respect to 100 parts by mol of the entire monomer of the second compound constituting the resin.

For the polymerization of the resin according to the present specification, methods known in the art may be used.

It is preferred that the polymerization is performed by a melt polycondensation method.

In the melt polycondensation method, a catalyst may be further applied as needed using the composition for preparing a polycarbonate resin, and melt polycondensation may be performed under heating and further under normal pressure or reduced pressure while removing by-products by an ester exchange reaction. As the catalyst, a material generally applied in the art may be adopted.

Specifically, in the melt polycondensation method, it is preferred that the compound of Chemical Formula 1a; and the polycarbonate precursor are melted in a reaction vessel, and then a reaction is performed in a state where a by-product compound is allowed to stay.

More specifically, in the melt polycondensation method, it is preferred that the compound of Chemical Formula 1a; the second compound; and the polycarbonate precursor are melted in a reaction vessel, and then a reaction is performed in a state where a by-product compound is allowed to stay.

In order to allow the by-product compound to stay, the reaction device may be closed, or pressure may be controlled by reducing pressure or increasing pressure.

The reaction time of this process is 20 minutes or more and 600 minutes or less, preferably 40 minutes or more and 450 minutes or less, and more preferably 60 minutes or more and 350 minutes or less.

In this case, when the by-product compound is distilled off immediately after being produced, a resin to be finally obtained has a small content of high molecular weight materials. However, when the by-product compound is allowed to stay in the reaction vessel for a certain period of time, the finally obtained resin is obtained to have a large content of high molecular weight materials.

The melt polycondensation method may be performed continuously or in a batch manner. The reaction device used for performing the reaction may be a vertical type equipped with a soken impeller, an anchor type impeller, a Maxblend impeller, a helical ribbon type impeller or the like, may be a horizontal type equipped with a paddle blade, a lattice blade, a spectacle-shaped blade or the like, and may be an extruder type equipped with a screw. In addition, it is desirably performed to use a reaction device in which these reaction devices are appropriately combined in consideration of the viscosity of the polymer.

In the method for preparing a polycarbonate resin used in the present specification, the catalyst may be removed or deactivated in order to maintain heat stability and hydrolysis stability after the completion of the polymerization reaction. A method of deactivating the catalyst by adding a known acidic material in the art may be preferably performed.

As the acidic material, for example, esters such as butyl benzoate, aromatic sulfonic acids such as p-toluenesulfonic acid; aromatic sulfonic acid esters such as butyl p-toluenesulfonate and hexyl p-toluenesulfonate; phosphoric acids such as phosphorous acid, phosphoric acid and phosphonic acid; phosphorous acid esters such as triphenyl phosphite, monophenyl phosphite, diphenyl phosphite, diethyl phosphite, di-n-propyl phosphite, di-n-butyl phosphite, di-n-hexyl phosphite, dioctyl phosphite and monooctyl phosphite; phosphoric acid esters such as triphenyl phosphate, diphenyl phosphate, monophenyl phosphate, dibutyl phosphate, dioctyl phosphate and monooctyl phosphate; phosphonic acids such as diphenylphosphonic acid, dioctylphosphonic acid and dibutylphosphonic acid; phosphonic acid esters such as diethyl phenylphosphonate; phosphines such as triphenylphosphine and bis(diphenylphosphino)ethane; boric acids such as boric acid and phenylboric acid; aromatic sulfonic acid salts such as dodecylbenzenesulfonic acid tetrabutylphosphonium salts; organic halides such as stearic acid chloride, benzoyl chloride and p-toluenesulfonic acid chloride; alkylsulfuric acids such as dimethylsulfuric acid; organic halides such as benzyl chloride, and the like are preferably used.

The acidic material may be used in an amount of 0.1 parts by mol to 5 parts by mol, preferably 0.1 parts by mol to 1 part by mol with respect to 100 parts by mol of the catalyst.

When the amount of the acidic material is smaller than 0.1 parts by mol, the deactivation effect becomes insufficient, which is not preferred. Further, when the amount exceeds 5 parts by mol, the heat resistance of the resin deteriorates and the molded article is easily colored, which is not preferred.

After the catalyst is deactivated, a process of devolatilizing a low boiling point compound in the resin may be further performed under a pressure of 0.1 mmHg to 1 mmHg and at a temperature of 200°C to 350°C. In this process, a horizontal-type apparatus equipped with a stirring blade having excellent surface renewal ability such as a paddle blade, a lattice blade, and a spectacle-shaped blade, or a thin film evaporator is preferably used.

It is preferred that the content of foreign materials in the resin of the present specification is as small as possible, and filtration of a melting raw material, filtration of a catalyst solution, and the like are preferably performed.

The mesh of the filter used in the filtration is preferably 5 um or less, and more preferably 1 um or less. In

addition, filtration of the produced resin using a polymer filter is preferably performed. The mesh of the polymer filter is preferably 100 um or less, and more preferably 30 um or less. Furthermore, a process of obtaining a resin pellet needs to be performed in a low-dust environment, and the environment is preferably Class 6 or lower, and more preferably Class 5 or lower.

Further, examples of a method of molding a molded article including the polycarbonate resin include compression molding, molds, roll processing, extrusion molding, stretching, and the like in addition to injection molding, but are not limited thereto.

Another exemplary embodiment of the present specification provides a polycarbonate resin composition including the resin according to the above-described exemplary embodiments.

In an exemplary embodiment of the present specification, the polycarbonate resin may be included in an amount of 1 part by weight to 80 parts by weight based on 100 parts by weight of the polycarbonate resin composition.

In an exemplary embodiment of the present specification, the polycarbonate resin composition may further include a solvent. The solvent may be, for example, dimethylacetamide or 1,2-dichlorobenzene.

The solvent may be included in an amount of 20 parts by weight to 99 parts by weight based on 100 parts by weight of the polycarbonate resin composition.

The polycarbonate resin composition may further include an additional monomer in addition to the compound of Chemical Formula 1a. The additional monomer is not particularly limited, and a monomer generally applied in the art related to the polycarbonate may be appropriately adopted as long as the main physical properties of the polycarbonate resin composition are not changed. The additional monomer may be used in an amount of 1 part by mol to 50 parts by mol with respect to 100 parts by mol of the entire monomer constituting the resin including the unit of Chemical Formula 1.

The polycarbonate resin composition may further include one or more of an additive, for example, an antioxidant, a plasticizer, an anti-static agent, a nucleating agent, a flame retardant, a lubricant, an impact modifier, a fluorescent brightener, a UV absorber, an inorganic additive, a pigment or a dye, if necessary, in addition to a resin including the unit of Chemical Formula 1.

The additive may be included in an amount of 1 part by weight to 99 parts by weight based on 100 parts by weight of the polycarbonate resin composition.

The type of antioxidant, plasticizer, anti-static agent, nucleating agent, flame retardant, lubricant, impact modifier, fluorescent brightener, UV absorber, inorganic additive, pigment or dye is not particularly limited, and those applied in the art may be appropriately adopted.

Still another exemplary embodiment of the present specification provides a molded article including the resin composition according to the above-described exemplary embodiments.

In an exemplary embodiment of the present specification, the molded article may be prepared from the polycarbonate resin composition or a cured product thereof.

As an example of a method of preparing the molded article, it is possible to include mixing a resin including the unit of Chemical Formula 1; and any one or more units of Chemical Formulae 2-1 to 2-3 and the additive well using a mixer, preparing the resulting mixture as a pellet by extrusion molding the mixture using an extruder, drying the pellet, and then injecting the pellet using an injection molding machine.

In an exemplary embodiment of the present specification, the molded article is an optical lens.

In an exemplary embodiment of the present specification, the optical lens has a thickness of 0.1 um to 30 mm.

An optical lens according to an exemplary embodiment of the present specification has a high refractive index, and thus may implement an optical lens with a small thickness.

The optical lens is manufactured using the polycarbonate resin, has a small thickness, a high refractive index and high transparency, and may be preferably applied to camera, mobile, vehicle, and self-driving sensor lenses.

In an exemplary embodiment of the present specification, the molded article is an optical fiber.

In an exemplary embodiment of the present specification, the molded article is an optical film or optical thin film. The optical film or optical thin film is manufactured using the polycarbonate resin, has a small thickness and excellent light harvesting effect and light diffusion effect, and may be preferably applied to backlight modules, flat lenses, and meta lenses of liquid crystal displays, and the like.

In an exemplary embodiment of the present specification, the optical film or optical thin film has a thickness of 0.1 nm to 10 mm.

In an exemplary embodiment of the present specification, the molded article is an optical resin. The optical resin is manufactured using the polycarbonate resin, and has a low optical loss due to its small thickness, high refractive index and low birefringence.

In an exemplary embodiment of the present specification, the molded article is an LED encap.

[Mode for Invention]

Hereinafter, the present specification will be exemplified in more detail through Examples.

Preparation Example 1.

82.103 g (0.1 mol) of Monomer 1a and 21.422 g (0.1 mol) of diphenylcarbonate were melted and reacted at 250°C for 5 hours. As the reaction proceeded, phenol was generated as a by-product, and the degree of decompression was adjusted up to 1 Torr to remove the phenol. After completion of the reaction, Resin 1, which is a polymerized polymer molten resin, was obtained by blowing nitrogen into the reactor to create a normal pressure atmosphere.

Monomer 1a:

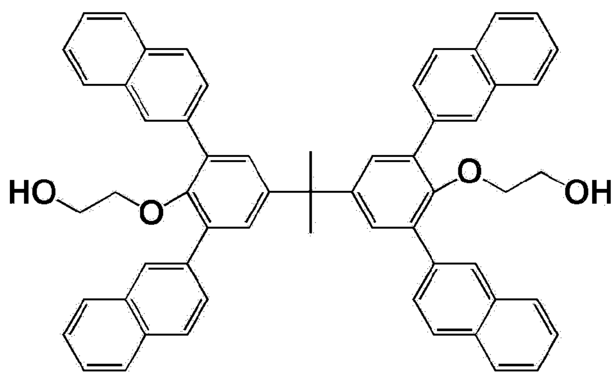

Preparation Example 2.

41.052 g (0.05 mol) of Monomer 1a, 18.708 g (0.05 mol) of Monomer 2-3, and 21.422 g (0.1 mol) of diphenylcarbonate were melted and reacted at 250°C for 5 hours. As the reaction proceeded, phenol was generated as a by-product, and the degree of decompression was adjusted up to 1 Torr to remove the phenol. After completion of the reaction, Resin 2, which is a polymerized polymer molten resin, was obtained by blowing nitrogen into the reactor to create a normal pressure atmosphere.

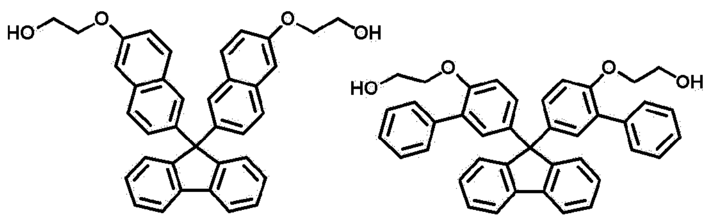

monomer 2-1 monomer 2-2

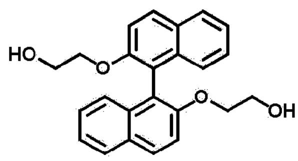

monomer 2-3

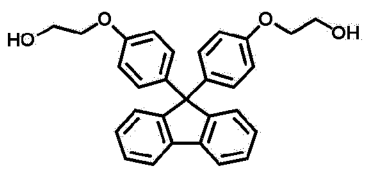

monomer 2-5

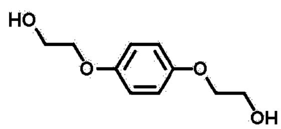

monomer 2-6

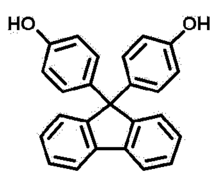

monomer 2-7

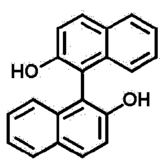

monomer 2-8

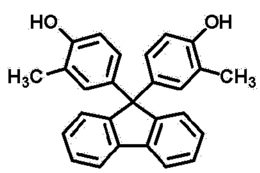

monomer 2-9

Preparation Example 3.

28.736 g (0.035 mol) of Monomer 1a, 16.159 g (0.03 mmol) of Monomer 2-1, 13.095 g (0.035 mol) of Monomer 2-3, and 21.422 g (0.1 mol) of diphenylcarbonate were melted and reacted at 250°C for 5 hours. As the reaction proceeded, phenol was generated as a by-product, and the degree of decompression was adjusted up to 1 Torr to remove the phenol. After completion of the reaction, Resin 3, which is a polymerized polymer molten resin, was obtained by blowing nitrogen into the reactor to create a normal pressure atmosphere.

Preparation Example 4.

24.631 g (0.03 mol) of Monomer 1a, 17.722 g (0.03 mmol) of Monomer 2-2, 14.966 g (0.04 mol) of Monomer 2-3, and 21.422 g (0.1 mol) of diphenylcarbonate were melted and reacted at 250°C for 5 hours. As the reaction proceeded, phenol was generated as a by-product, and the degree of decompression was adjusted up to 1 Torr to remove the phenol. After completion of the reaction, Resin 4, which is a polymerized polymer molten resin, was obtained by blowing nitrogen into the reactor to create a normal pressure atmosphere.

Preparation Example 5.

24.631 g (0.03 mol) of Monomer 1a, 14.966 g (0.04 mol) of Monomer 2-3, 13.156 g (0.03 mmol) of Monomer 2-5, and 21.422 g (0.1 mol) of diphenylcarbonate were melted and reacted at 250°C for 5 hours. As the reaction proceeded, phenol was generated as a by-product, and the degree of decompression was adjusted up to 1 Torr to remove the phenol. After completion of the reaction, Resin 5, which is a polymerized polymer molten resin, was obtained by blowing nitrogen into the reactor to create a normal pressure atmosphere.

Preparation Example 6.

16.421 g (0.02 mol) of Monomer 1a, 14.966 g (0.04 mol) of Monomer 2-3, 3.964 g (0.02 mmol) of Monomer 2-6, 7.008 g (0.02 mmol) of Monomer 2-7, and 21.422 g (0.1 mol) of diphenylcarbonate were melted and reacted at 250°C for 5 hours. As the reaction proceeded, phenol was generated as a by-product, and the degree of decompression was adjusted up to 1 Torr to remove the phenol. After completion of the reaction, Resin 6, which is a polymerized polymer molten resin, was obtained by blowing nitrogen into the reactor to create a normal pressure atmosphere.

Preparation Example 7.

16.421 g (0.02mol) of Monomer 1a, 14.966 g (0.04mol) of Monomer 2-3, 3.964 g (0.02 mmol) of Monomer 2-6, 5.726 g (0.02 mmol) of Monomer 2-8, and 21.422 g (0.1 mol) of diphenylcarbonate were melted and reacted at 250°C for 5 hours. As the reaction proceeded, phenol was generated as a by-product, and the degree of decompression was adjusted up to 1 Torr to remove the phenol. After completion of the reaction, Resin 7, which is a polymerized polymer molten resin, was obtained by blowing nitrogen into the reactor to create a normal pressure atmosphere.

Preparation Example 8.

16.421 g (0.02mol) of Monomer 1a, 14.966 g (0.04mol) of Monomer 2-3, 3.964 g (0.02 mmol) of Monomer 2-6, 7.569g (0.02 mmol) of Monomer 2-9, and 21.422 g (0.1 mol) of diphenylcarbonate were melted and reacted at 250°C for 5 hours. As the reaction proceeded, phenol was generated as a by-product, and the degree of decompression was adjusted up to 1 Torr to remove the phenol. After completion of the reaction, Resin 8, which is a polymerized polymer molten resin, was obtained by blowing nitrogen into the reactor to create a normal pressure atmosphere.

Preparation Example 9.

12.315 g (0.015 mol) of Monomer 1a, 21.546 g (0.04 mmol) of Monomer 2-1, 2.954 g (0.005 mmol) of Monomer 2-2, 14.966 g (0.04 mmol) of Monomer 2-3, and 21.422 g (0.1 mol) of diphenylcarbonate were melted and reacted at 250°C for 5 hours. As the reaction proceeded, phenol was generated as a by-product, and the degree of decompression was adjusted up to 1 Torr to remove the phenol. After completion of the reaction, Resin 9, which is a polymerized polymer molten resin, was obtained by blowing nitrogen into the reactor to create a normal pressure atmosphere.

Example.

The molecular weight and molecular weight distribution (PDI = Mw/Mn) of the polymerized resin sample were confirmed through gel permeation chromatography (GPC), and a thermogram was obtained using a differential scanning calorimeter (DSC) to investigate the thermal characteristics. After a film was formed to measure the refractive index and the Abbe's Number, a result value according to the wavelength of light was obtained using an ellipsometer.

For the molecular weight through gel permeation chromatography (GPC), results were obtained by injecting a solution produced using tetrahydrofuran (THF, stabilized with butylated hydroxytoluene (BHT)) as a solvent, dissolving the resin sample in tetrahydrofuran at a concentration of 1.0 mg/1 ml, filtering the dissolved resin sample with a syringe filter, and measuring the molecular weight at 40°C, and the results are shown in the following Table 2. A Waters RI detector was used, and two Agilent PLgel MIXED-B columns were used.

A differential scanning calorimeter (DSC) was measured to determine the glass transition temperature (Tg) of the resin. A glass transition temperature (Tg) was obtained on a graph obtained by heating a 5.5 mg to 8.5 mg of the resin sample to 270°C under $N_2$ flow, cooling the resin sample, and then scanning the resin sample while heating the resin sample at a heating rate of 10°C/min during the second heating, and the glass transition temperature (Tg) is shown in the following Table 2.

In order to measure the refractive index and Abbe's Number of the resin, a polymer solution prepared by dissolving a resin powder sample obtained by polymerization in a solvent dimethylacetamide in an amount of 10 wt% based on the total weight of the polymer solution was applied onto a silicon wafer at a rotation speed of 220 rpm by spin coating to form a film having a thickness of 20 μm, and then the resulting values according to the wavelength of light were obtained at 20°C using an ellipsometer, and are shown in the following Table 2. Specifically, the refractive index was measured at a wavelength of 589 nm, and an Abbe's Number was obtained by the following Equation by measuring the refractive index ($n_D$, $n_F$, and $n_C$) at a wavelength of D (589 nm), F (486 nm), and C (656 nm), respectively.

$$\text{Abbe's Number} = (n_D-1)/(n_F - n_C)$$

[Table 1]

| | | Monomer 1a | Monomer 2-1 | Monomer 2-2 | Monomer 2-3 | Monomer 2-5 | Monomer 2-6 | Monomer 2-7 | Monomer 2-8 | Monomer 2-9 | Polycarbonate precursor |
|---|---|---|---|---|---|---|---|---|---|---|---|
| Example 1 | Resin 1 | 100 | | | | | | | | | 100 |
| Example 2 | Resin 2 | 50 | | | 50 | | | | | | 100 |
| Example 3 | Resin 3 | 35 | 30 | | 35 | | | | | | 100 |
| Example 4 | Resin 4 | 30 | | 30 | 40 | | | | | | 100 |
| Example 5 | Resin 5 | 30 | | | 40 | 30 | | | | | 100 |
| Example 6 | Resin 6 | 20 | | | 40 | | 20 | 20 | | | 100 |
| Example 7 | Resin 7 | 20 | | | 40 | | 20 | | 20 | | 100 |
| Example 8 | Resin 8 | 20 | | | 40 | | 20 | | | 20 | 100 |
| Example 9 | Resin 9 | 15 | 40 | 5 | 40 | | | | | | 100 |

Table 1 shows the part by mol of each monomer included in Resins 1 to 9 of Examples 1 to 9.

[Table 2]

| | | Refractive index | Tg | Abbe's Number | Mn | Mw | PDI |
|---|---|---|---|---|---|---|---|
| Example 1 | Resin 1 | 1.720 | 166 | 12.95 | 14000 | 27000 | 1.93 |
| Example 2 | Resin 2 | 1.692 | 140 | 15.80 | 18000 | 33000 | 1.83 |
| Example 3 | Resin 3 | 1.691 | 148 | 16.10 | 19000 | 36000 | 1.89 |
| Example 4 | Resin 4 | 1.682 | 142 | 17.15 | 17000 | 32000 | 1.88 |
| Example 5 | Resin 5 | 1.675 | 141 | 18.12 | 20000 | 38000 | 1.90 |
| Example 6 | Resin 6 | 1.670 | 138 | 18.52 | 11000 | 21000 | 1.91 |
| Example 7 | Resin 7 | 1.672 | 131 | 18.10 | 10000 | 18000 | 1.80 |
| Example 8 | Resin 8 | 1.671 | 132 | 18.67 | 9000 | 17000 | 1.89 |
| Example 9 | Resin 9 | 1.683 | 149 | 16.95 | 21000 | 38000 | 1.81 |

In Table 2, Mn means the number average molecular weight, Mw means the weight average molecular weight, PDI means the polydispersity index, RI means the refractive index, Tg means the glass transition temperature, and the refractive index is a value measured at a wavelength of 587 nm.

According to Tables 1 and 2, the resins of Examples 1 to 9 include the unit of Chemical Formula 1 according to exemplary embodiments of the present specification, and may improve the refractive index by increasing the electron density of a bisphenol A core structure, particularly when substituted with an electron-rich substituent such as R1 to R4 of the benzene ring of the bisphenol A core structure.

Furthermore, since any one or more units of Chemical Formulae 2-1 to 2-3 are further included, the glass transition temperature (Tg) and refractive index can be adjusted, and the chain behavior of the polycarbonate resin can be made flexible, so that there is a technical effect advantageous for the injection processing of a molded article.

## Claims

1. A polycarbonate resin comprising a unit represented by Chemical Formula 1:

[Chemical Formula 1]

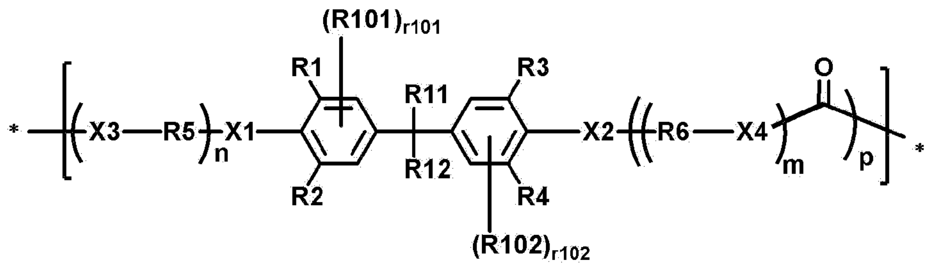

in Chemical Formula 1,

X1 to X4 are the same as or different from each other, and are each independently O or S,

R1 and R3 are the same as or different from each other, and are each independently a phenyl group which is substituted with a cyano group, or a substituted or unsubstituted alkyl group; a substituted or unsubstituted aryl group having 10 or more carbon atoms; a substituted or unsubstituted condensed ring group of an aromatic hydrocarbon ring and an aliphatic hydrocarbon ring; or a substituted or unsubstituted heteroaryl group,

R2 and R4 are the same as or different from each other, and are each independently hydrogen; a substituted or unsubstituted alkyl group; a substituted or unsubstituted cycloalkyl group; a substituted or unsubstituted aryl group; a substituted or unsubstituted condensed ring group of an aromatic hydrocarbon ring and an aliphatic

hydrocarbon ring; or a substituted or unsubstituted heteroaryl group,

R5 and R6 are the same as or different from each other, and are each independently a substituted or unsubstituted alkylene group; or a substituted or unsubstituted cycloalkylene group,

R11 and R12 are the same as or different from each other, and are each independently a substituted or unsubstituted alkyl group; a substituted or unsubstituted cycloalkyl group; a substituted or unsubstituted aryl group; or a substituted or unsubstituted heteroaryl group, or are bonded to each other to form a substituted or unsubstituted aromatic hydrocarbon ring,

R101 and R102 are the same as or different from each other, and are each independently hydrogen; a substituted or unsubstituted alkyl group; a substituted or unsubstituted cycloalkyl group; a substituted or unsubstituted aryl group; or a substituted or unsubstituted heteroaryl group,

r101 is 1 or 2, and when r101 is 2, two R101's are the same as or different from each other,

r102 is 1 or 2, and when r102 is 2, two R102's are the same as or different from each other,

m and n are each independently an integer from 0 to 6,

p is an integer from 1 to 6,

when m, n and p are each independently 2 or higher, structures in each parenthesis are the same as or different from each other, and

* means a moiety linked to the main chain of the resin.

**2.** The polycarbonate resin of claim 1, further comprising any one or more units represented by Chemical Formulae 2-1 to 2-3:

[Chemical Formula 2-1]

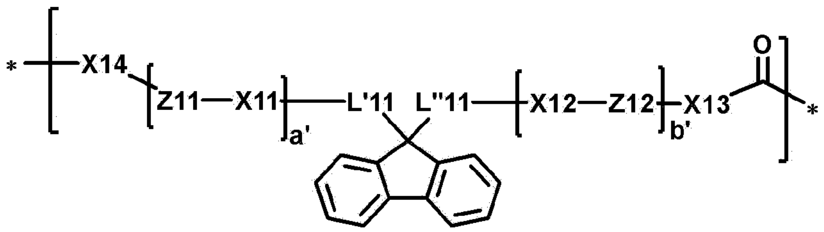

[Chemical Formula 2-2]

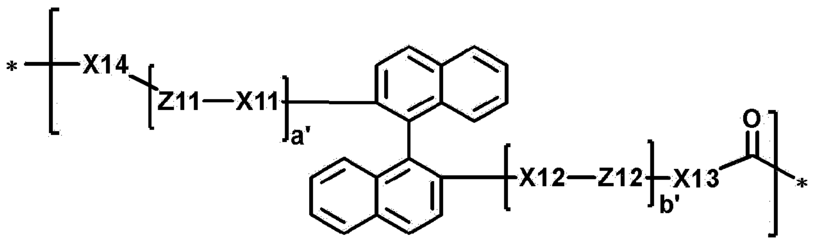

[Chemical Formula 2-3]

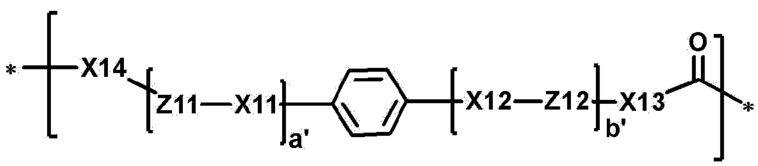

in Chemical Formulae 2-1 to 2-3,

L'11 and L"11 are the same as or different from each other, and are each independently a substituted or unsubstituted alkylene group; a substituted or unsubstituted cycloalkylene group; or a substituted or unsubstituted arylene group,
X11 to X14 are the same as or different from each other, and are each independently O; or S,
Z11 and Z12 are the same as or different from each other, and are each independently a substituted or unsubstituted alkylene group; or a substituted or unsubstituted cycloalkylene group,
a' and b' are the same as or different from each other, and are each independently an integer from 0 to 10, and when a' and b' are each independently 2 or higher, structures in each parenthesis are the same as or different from each other, and
* means a moiety linked to the main chain of the resin.

**3.** The polycarbonate resin of claim 1, which is represented by Chemical Formula 1-1:

[Chemical Formula 1-1]

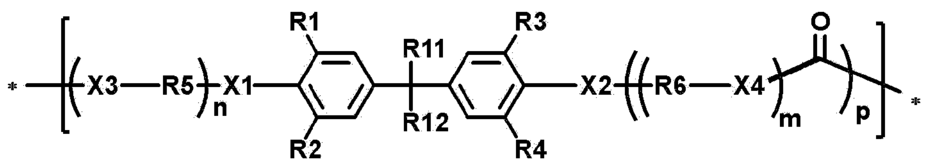

in Chemical Formula 1-1,
the definitions of *, m, n, p, R1 to R6, R11, R12 and X1 to X4 are the same as those defined in Chemical Formula 1.

**4.** The polycarbonate resin of claim 1, wherein X1 to X4 are the same as or different from each other, and are each independently O or S,

R1 and R3 are the same as or different from each other, and are each independently a phenyl group which is substituted with a cyano group, or a straight-chained or branched alkyl group having 1 to 30 carbon atoms; a monocyclic or polycyclic aryl group having 10 to 30 carbon atoms, which is unsubstituted or substituted with a cyano group, a straight-chained or branched alkyl group having 1 to 30 carbon atoms, a straight-chained or branched alkenyl group having 2 to 30 carbon atoms, or a monocyclic or polycyclic heterocyclic group having 2 to 30 carbon atoms; a condensed ring group of a monocyclic or polycyclic aromatic hydrocarbon ring having 6 to 30 carbon atoms and a monocyclic or polycyclic aliphatic hydrocarbon ring having 3 to 30 carbon atoms; or a polycyclic heteroaryl group having 6 to 30 carbon atoms,
R2 and R4 are the same as or different from each other, and are each independently hydrogen; a straight-chained or branched alkyl group having 1 to 30 carbon atoms; a monocyclic or polycyclic cycloalkyl group having 6 to 30 carbon atoms; a monocyclic or polycyclic aryl group having 6 to 30 carbon atoms, which is unsubstituted or substituted with a cyano group, a straight-chained or branched alkyl group having 1 to 30 carbon atoms, a straight-chained or branched alkenyl group having 2 to 30 carbon atoms, or a monocyclic or polycyclic heterocyclic group having 2 to 30 carbon atoms; a condensed ring group of a monocyclic or polycyclic aromatic hydrocarbon ring having 6 to 30 carbon atoms and a monocyclic or polycyclic aliphatic hydrocarbon ring having 3 to 30 carbon atoms; or a polycyclic heteroaryl group having 6 to 30 carbon atoms,
R5 and R6 are the same as or different from each other, and are each independently a straight-chained or branched alkylene group having 2 to 30 carbon atoms; or a monocyclic or polycyclic cycloalkylene group having 6 to 30 carbon atoms, and
R11 and R12 are the same as or different from each other, and are each independently a straight-chained or branched alkyl group having 1 to 30 carbon atoms; a monocyclic or polycyclic cycloalkyl group having 6 to 30 carbon atoms; a monocyclic or polycyclic aryl group having 6 to 30 carbon atoms; or a monocyclic or polycyclic heteroaryl group having 2 to 30 carbon atoms, or are bonded to each other to form a polycyclic aromatic hydrocarbon ring having 10 to 30 carbon atoms.

**5.** The polycarbonate resin of claim 2, wherein X11 to X14 are O,

L'll and L"11 are the same as or different from each other, and are each independently a monocyclic or polycyclic alkylene group having 1 to 30 carbon atoms; or a monocyclic or polycyclic arylene group having 6 to 50 carbon atoms, which is unsubstituted or substituted with a straight-chained or branched alkyl group having 1 to 30 carbon atoms or a monocyclic or polycyclic aryl group having 6 to 30 carbon atoms, and
Z11 and Z12 are the same as or different from each other, and are each independently a straight-chained or

branched alkylene group having 1 to 30 carbon atoms.

**6.** The polycarbonate resin of claim 1, which has a weight average molecular weight (Mw) of 5000 g/mol to 500,000 g/mol.

**7.** The polycarbonate resin of claim 1, which has a refractive index, measured at a wavelength of 587 nm, of 1.50 to 1.75.

**8.** The polycarbonate resin of claim 1, which has a glass transition temperature (Tg) of 90°C to 200°C.

**9.** The polycarbonate resin of claim 1, which has an Abbe's Number, measured at a wavelength of 486, 587, and 656 nm, of 5 to 45.

**10.** A method for preparing the polycarbonate resin according to any one of claims 1 to 9, the method comprising polymerizing a composition, which comprises a compound represented by Chemical Formula 1a; and

a polycarbonate precursor:

[Chemical Formula 1a]

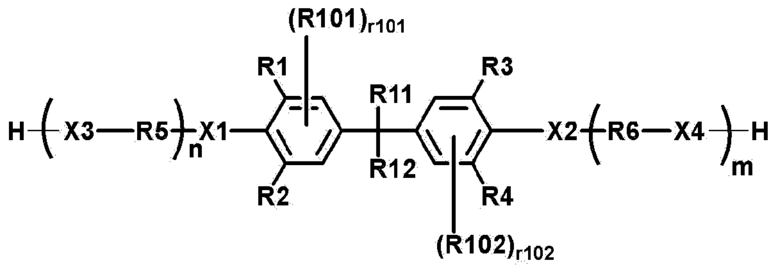

in Chemical Formula 1a,
the definitions of m, n, R1 to R6, R11, R12, R101, R102, r101, r102 and X1 to X4 are the same as those defined in Chemical Formula 1.

**11.** The method of claim 10, further a second compound represented by Chemical Formulae 2a-1 to 2a-3, and the compound represented by Chemical Formula 1a, and the second compound are comprised at a ratio of 0.01 mole% to 100 mole% : 99.99 mole% to 0 mole%:

[Chemical Formula 2a-1]

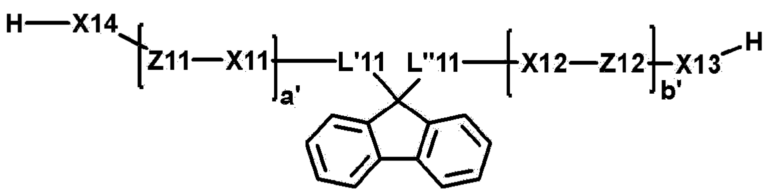

[Chemical Formula 2a-2]

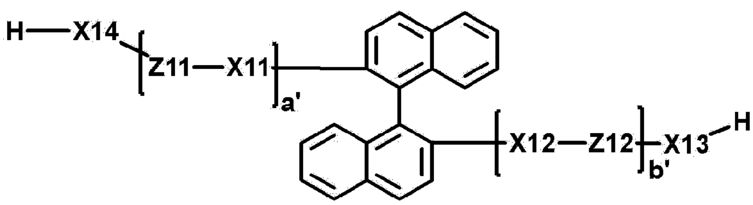

[Chemical Formula 2a-3]

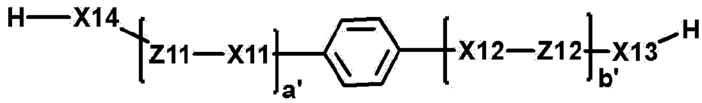

in Chemical Formulae 2a-1 to 2a-3,

L'll and L"11 are the same as or different from each other, and are each independently a substituted or unsubstituted alkylene group; a substituted or unsubstituted cycloalkylene group; or a substituted or unsubstituted arylene group,
X11 to X14 are the same as or different from each other, and are each independently O; or S,
Z11 and Z12 are the same as or different from each other, and are each independently a substituted or unsubstituted alkylene group; or a substituted or unsubstituted cycloalkylene group, and
a' and b' are the same as or different from each other, and are each independently an integer from 0 to 10, and when a' and b' are each independently 2 or higher, structures in each parenthesis are the same as or different from each other.

**12.** The method of claim 10, wherein the polycarbonate precursor is represented by Chemical Formula A:

[Chemical Formula A]

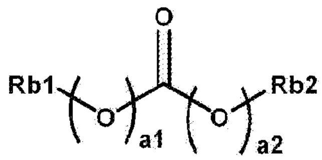

in Chemical Formula A,

Rb1 and Rb2 are the same as or different from each other, and are each independently a halogen group; a substituted or unsubstituted alkyl group; a substituted or unsubstituted cycloalkyl group; or a substituted or unsubstituted aryl group, and
a1 and a2 are each independently 0 or 1.

**13.** A polycarbonate resin composition comprising the polycarbonate resin according to any one of claims 1 to 9.

**14.** A molded article comprising the polycarbonate resin composition according to claim 13.

**15.** The molded article of claim 14, wherein the molded article is an optical lens.

**16.** The molded article of claim 15, wherein the optical lens has a thickness of 0.1 um to 30 mm.

**INTERNATIONAL SEARCH REPORT**

International application No.
**PCT/KR2023/009292**

**A. CLASSIFICATION OF SUBJECT MATTER**

**C08G 64/16**(2006.01)i; **C08G 64/30**(2006.01)i; **C08L 69/00**(2006.01)i; **G02B 1/04**(2006.01)i

According to International Patent Classification (IPC) or to both national classification and IPC

**B. FIELDS SEARCHED**

Minimum documentation searched (classification system followed by classification symbols)

C08G 64/16(2006.01); C08F 2/50(2006.01); C08F 220/26(2006.01); C08G 63/64(2006.01); C08G 63/672(2006.01); C08G 63/688(2006.01); C08G 64/04(2006.01); C08G 64/06(2006.01); C08G 64/30(2006.01); G03F 7/027(2006.01); G03F 7/032(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal), STN (Registry, Caplus) & keywords: 폴리카보네이트(polycarbonate), 알코올(alcohol), 굴절률(refractive index), 아베수(Abbe's Number)

**C. DOCUMENTS CONSIDERED TO BE RELEVANT**

| Category* | Citation of document, with indication, where appropriate, of the relevant passages | Relevant to claim No. |
|---|---|---|
| X | KR 10-2019-0140074 A (TEIJIN LIMITED) 18 December 2019 (2019-12-18)<br>See claims 10 and 14-15; paragraphs [0092] and [0314]-[0323]; and table 1. | 1-16 |
| A | KR 10-1532341 B1 (CONCO LIMITED) 29 June 2015 (2015-06-29)<br>See entire document | 1-16 |
| A | JP 2020-117610 A (TEIJIN LTD.) 06 August 2020 (2020-08-06)<br>See entire document | 1-16 |
| A | CN 112250852 A (WANHUA CHEMICAL GROUP CO., LTD.) 22 January 2021 (2021-01-22)<br>See entire document | 1-16 |
| A | JP 2010-055052 A (HITACHI CHEM CO., LTD.) 11 March 2010 (2010-03-11)<br>See entire document | 1-16 |

☐ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **23 October 2023** | **24 October 2023** |
| Name and mailing address of the ISA/KR<br>**Korean Intellectual Property Office**<br>**Government Complex-Daejeon Building 4, 189 Cheongsa-ro, Seo-gu, Daejeon 35208**<br>Facsimile No. **+82-42-481-8578** | Authorized officer<br><br>Telephone No. |

Form PCT/ISA/210 (second sheet) (July 2022)

**INTERNATIONAL SEARCH REPORT**
**Information on patent family members**

International application No.
**PCT/KR2023/009292**

| Patent document cited in search report | Publication date (day/month/year) | Patent family member(s) | Publication date (day/month/year) |
|---|---|---|---|
| KR 10-2019-0140074 A | 18 December 2019 | CN 110741030 A | 31 January 2020 |
| | | CN 110741030 B | 17 June 2022 |
| | | CN 113474685 A | 01 October 2021 |
| | | EP 3677614 A1 | 08 July 2020 |
| | | EP 3677614 A4 | 08 July 2020 |
| | | EP 3933456 A1 | 05 January 2022 |
| | | EP 3933456 A4 | 22 June 2022 |
| | | JP 2020-012094 A | 23 January 2020 |
| | | JP 2021-175577 A1 | 04 November 2021 |
| | | JP 7227345 B2 | 21 February 2023 |
| | | KR 10-2021-0097779 A | 09 August 2021 |
| | | KR 10-2362026 B1 | 10 February 2022 |
| | | TW 201920352 A | 01 June 2019 |
| | | TW 202045582 A | 16 December 2020 |
| | | TW I787317 B | 21 December 2022 |
| | | US 11261294 B2 | 01 March 2022 |
| | | US 2021-0147621 A1 | 20 May 2021 |
| | | US 2022-0146713 A1 | 12 May 2022 |
| | | WO 2019-044214 A1 | 07 March 2019 |
| | | WO 2020-175577 A1 | 03 September 2020 |
| KR 10-1532341 B1 | 29 June 2015 | None | |
| JP 2020-117610 A | 06 August 2020 | JP 7221706 B2 | 14 February 2023 |
| CN 112250852 A | 22 January 2021 | CN 112250852 B | 13 January 2023 |
| JP 2010-055052 A | 11 March 2010 | JP 5476739 B2 | 23 April 2014 |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- KR 1020220082384